(19) Europäisches Patentamt
European Patent Office
Office européen des brevets

(11) **EP 4 668 656 A1**

(12) **EUROPEAN PATENT APPLICATION**
published in accordance with Art. 153(4) EPC

(43) Date of publication:
**24.12.2025 Bulletin 2025/52**

(21) Application number: **24757317.3**

(22) Date of filing: **16.02.2024**

(51) International Patent Classification (IPC):
***H04L 5/00*** *(2006.01)* ***H04W 72/0457*** *(2023.01)*
***H04W 64/00*** *(2009.01)*

(52) Cooperative Patent Classification (CPC):
**H04L 5/00; H04W 64/00; H04W 72/0457**

(86) International application number:
**PCT/KR2024/095309**

(87) International publication number:
**WO 2024/172600 (22.08.2024 Gazette 2024/34)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **16.02.2023 KR 20230021071**

(71) Applicant: **LG Electronics Inc.**
**Yeongdeungpo-gu**
**Seoul 07336 (KR)**

(72) Inventors:
- **CHOI, Minwoo**
  **Seoul 06772 (KR)**
- **HWANG, Seunggye**
  **Seoul 06772 (KR)**
- **KO, Hyunsoo**
  **Seoul 06772 (KR)**
- **GO, Seongwon**
  **Seoul 06772 (KR)**

(74) Representative: **Frenkel, Matthias Alexander**
**Wuesthoff & Wuesthoff**
**Patentanwälte und Rechtsanwalt PartG mbB**
**Schweigerstraße 2**
**81541 München (DE)**

(54) **METHOD AND DEVICE FOR TRANSMITTING/RECEIVING WIRELESS SIGNAL IN WIRELESS COMMUNICATION SYSTEM**

(57) A method by which a terminal transmits a signal in a wireless communication system, according to at least one of the embodiments disclosed in the present specification, comprises: receiving configuration information related to signal transmission of the terminal through uplink layer signaling; determining one or more transmission bandwidth parts (BWP) on the basis of the configuration information; and transmitting a first signal in a first transmission BWP from among the determined one or more transmission BWPs, wherein the terminal can transmit, at least twice, the first signal through frequency hopping in the first transmission BWP on the basis that the first transmission BWP exceeds the maximum transmission bandwidth size of the terminal.

**FIG. 27**

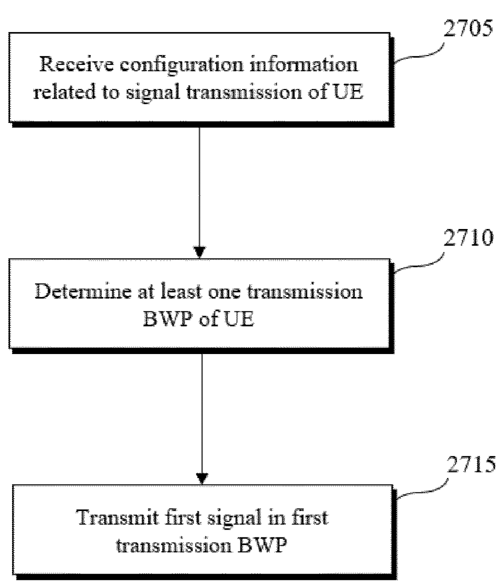


EP 4 668 656 A1

## Description

### TECHNICAL FIELD

The present disclosure relates to a wireless communication system, and more particularly, to a method and apparatus for transmitting and receiving a wireless signal.

### BACKGROUND

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may be any of a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

### DISCLOSURE

### TECHNICAL PROBLEM

An object of the disclosure is to provide a method and device for transmitting or receiving signals more accurately and efficiently in a wireless communication system.

The objects of the disclosure are not limited thereto, and other objects may be inferred from the disclosed embodiments.

### TECHNICAL SOLUTION

In one aspect of the present disclosure, a method of transmitting a signal by a terminal in a wireless communication system may include receiving configuration information related to signal transmission of the device through higher layer signaling, determining at least one transmission bandwidth part (BWP) based on the configuration information, and transmitting a first signal in a first transmission BWP among the determined at least one transmission BWP. Based on the first transmission BWP exceeding a maximum transmission bandwidth size for the terminal, the terminal performs the transmission of the first signal at least twice through frequency hopping within the first transmission BWP.

The first signal may be a wireless sensing signal for object sensing. The first transmission BWP may be one virtual BWP configured based on a plurality of physical BWPs each having a size less than or equal to the maximum transmission bandwidth size for the terminal.

The first transmission BWP may be greater than a second transmission BWP for transmission of a second signal containing uplink data. The terminal may perform BWP switching from the second transmission BWP to the first transmission BWP to transmit the first signal.

The first transmission BWP may include a plurality of sub-BWPs. At least one of the plurality of sub-BWPs partially overlaps with at least one other sub-BWP in a frequency domain.

The frequency hopping within the first transmission BWP may be performed based on switching among the plurality of sub-BWPs.

The first signal may include a sounding reference signal (SRS) for positioning.

The first signal may be a signal related to Integrated Sensing and Communication (ISAC).

In another aspect of the present disclosure, a processor-readable recording medium having recorded thereon a program for executing the above-described transmission method may be provided.

In another aspect of the present disclosure, a device for wireless communication may include a memory configured to store instructions, and a processor configured to perform operations by executing the instructions. The operations of the processor may include receiving configuration information related to signal transmission of the device through higher layer signaling, determining at least one transmission bandwidth part (BWP) based on the configuration information, and transmitting a first signal in a first transmission BWP among the determined at least one transmission BWP. Based on the first transmission BWP exceeding a maximum transmission bandwidth size for the terminal, the device may perform the transmission of the first signal at least twice through frequency hopping within the first transmission BWP.

The device may further include a transceiver.

The device may be a terminal operating in a wireless communication system.

The device may be a processing device configured to control a terminal operating in a wireless communication system.

In another aspect of the present disclosure, a method of receiving a signal by at least one base station in a wireless communication system may include determining at least one transmission bandwidth part (BWP) for a terminal, transmitting configuration information related to signal transmission of the terminal through higher layer signaling based on the determination of the at least one transmission BWP, and receiving a first signal in a first transmission BWP among the determined at least one transmission BWP. Based on the first transmission BWP exceeding a maximum transmission bandwidth size for the terminal, the base station may perform the reception of the first signal at least twice through frequency hopping within the first transmission BWP.

In another aspect of the present disclosure, a processor-readable recording medium having recorded thereon a program for executing the above-described reception method may be provided.

In another aspect of the present disclosure, a base station for wireless communication may include at least one memory configured to store instructions, and at least one processor configured to perform operations by executing the instructions. The operations of the at least one processor may include determining at least one transmission bandwidth part (BWP) for a terminal, transmitting configuration information related to signal transmission of the terminal through higher layer signaling based on the determination of the at least one transmission BWP, and receiving a first signal in a first transmission BWP among the determined at least one transmission BWP. Based on the first transmission BWP exceeding a maximum transmission bandwidth size for the terminal, the base station may perform the reception of the first signal at least twice through frequency hopping within the first transmission BWP.

ADVANTAGEOUS EFFECTS

According to an embodiment of the present disclosure, a signal can be more accurately and efficiently transmitted or received in a wireless communication system.

The effects of the disclosure are not limited thereto, and other advantageous effects may be inferred from the disclosed embodiments.

**BRIEF DESCRIPTION OF THE DRAWINGS**

FIG. 1 illustrates physical channels used in a 3rd generation partnership project (3GPP) system as an exemplary wireless communication system, and a general signal transmission method using the same.
FIG. 2 illustrates a radio frame structure.
FIG. 3 illustrates a resource grid of a slot.
FIG. 4 illustrates exemplary mapping of physical channels in a slot
FIG. 5 illustrates an exemplary physical downlink shared channel (PDSCH) reception and acknowledgement/negative acknowledgement (ACK/NACK) transmission process.
FIG. 6 illustrates an exemplary physical uplink shared channel (PUSCH) transmission process.
FIG. 7 illustrates an example of setting a positioning protocol.
FIG. 8 illustrates an example of OTDOA.
FIG. 9 illustrates an example of Multi RTT.
FIG. 10 illustrates a procedure for operating a network node (e.g., an upper node of a user equipment (UE), location management function (LMF), etc.) according to an embodiment.
FIG. 11 illustrates a UE operation procedure for performing positioning measurement.
FIG. 12 illustrates various integrated sensing and communication (ISAC) environments.
FIGS. 13 and 14 illustrate examples of a 3GPP wireless communication system supporting ISAC.
FIG. 15 is a diagram illustrating operations of a UE for SRS-p frequency hopping transmission according to an embodiment.
FIG. 16 shows an example of an SRS bandwidth configuration table for a RedCap UE according to an embodiment.
FIG. 17 is a diagram illustrating operations of a BS for SRS-p frequency hopping transmission according to an embodiment.
FIG. 18 is a diagram illustrating interaction between a UE and a BS during SRS-p resource allocation according to an embodiment.
FIG. 19 is a diagram illustrating operations of a UE in a frequency hopping scheme using BWP switching according to an embodiment.
FIG. 20 is a diagram illustrating operations of a BS in a frequency hopping scheme using BWP switching according to an embodiment.
FIG. 21 is a diagram illustrating a sensing signal transmitted based on frequency hopping according to an embodiment.
FIG. 22 is a diagram illustrating operations of a UE for frequency hopping within a virtual bandwidth range according to an embodiment.
FIG. 23 is a diagram illustrating operations of a BS for frequency hopping within a virtual bandwidth range according to an embodiment.
FIG. 24 is a diagram illustrating a sensing signal transmitted based on Sens-BWP switching according to an embodiment.
FIG. 25 is a diagram illustrating operations of a UE for Sens-BWP switching according to an embodiment.
FIG. 26 is a diagram illustrating operations of a BS for Sens-BWP switching according to an embodiment.
FIG. 27 illustrates a flow of a signal transmission method for a UE according to an embodiment.
FIG. 28 illustrates a flow of a signal reception method for a BS according to an embodiment.
FIGS. 29 to 32 illustrate an example of a communication system 1 and wireless devices applicable to the present disclosure.

## DETAILED DESCRIPTION

Embodiments of the present disclosure are applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA can be implemented as a radio technology such as Universal Terrestrial Radio Access (UTRA) or CDMA2000. TDMA can be implemented as a radio technology such as Global System for Mobile communications (GSM)/General Packet Radio Service (GPRS)/Enhanced Data Rates for GSM Evolution (EDGE). OFDMA can be implemented as a radio technology such as Institute of Electrical and Electronics Engineers (IEEE) 802.11 (Wireless Fidelity (Wi-Fi)), IEEE 802.16 (Worldwide interoperability for Microwave Access (WiMAX)), IEEE 802.20, and Evolved UTRA (E-UTRA). UTRA is a part of Universal Mobile Telecommunications System (UMTS). 3rd Generation Partnership Project (3GPP) Long Term Evolution (LTE) is part of Evolved UMTS (E-UMTS) using E-UTRA, and LTE-Advanced (A) is an evolved version of 3GPP LTE. 3GPP NR (New Radio or New Radio Access Technology) is an evolved version of 3GPP LTE/LTE-A.

As more and more communication devices require a larger communication capacity, there is a need for mobile broadband communication enhanced over conventional radio access technology (RAT). In addition, massive Machine Type Communications (MTC) capable of providing a variety of services anywhere and anytime by connecting multiple devices and objects is another important issue to be considered for next generation communications. Communication system design considering services/UEs sensitive to reliability and latency is also under discussion. As such, introduction of new radio access technology considering enhanced mobile broadband communication (eMBB), massive MTC, and Ultra-Reliable and Low Latency Communication (URLLC) is being discussed. In an embodiment of the present disclosure, for simplicity, this technology will be referred to as NR (New Radio or New RAT).

As used herein, the term "base station" may be replaced by terms such as fixed station, Node B, gNode B (gNB), Access Point (AP), cell, or transmission and reception point (TRP). The term relay may be replaced by terms such as relay node (RN), relay station, and the like. Also, the term "terminal" may be replaced by terms such as user equipment (UE), mobile station (MS), mobile subscriber station (MSS), subscriber station (SS), and the like.

For the sake of clarity, 3GPP NR is mainly described, but the technical idea of the present disclosure is not limited thereto.

For the background art relevant to the present disclosure, the definitions of terms, and abbreviations, the following documents may be incorporated by reference.

- 38.211: Physical channels and modulation
- 38.212: Multiplexing and channel coding
- 38.213: Physical layer procedures for control
- 38.214: Physical layer procedures for data
- 38.215: Physical layer measurements
- 38.300: NR and NG-RAN Overall Description
- 38.304: User Equipment (UE) procedures in idle mode and in RRC Inactive state
- 38.321Medium Access Control (MAC) protocol specification
- 38.331: Radio Resource Control (RRC) protocol specification
- 37.213: Introduction of channel access procedures to unlicensed spectrum for NR-based access
- 36.355: LTE Positioning Protocol
- 37.355: LTE Positioning Protocol

Terms and Abbreviations

- 5GC: 5G Core Network
- 5GS: 5G System
- AoA: Angle of Arrival
- AP: Access Point
- CID: Cell ID
- E-CID: Enhanced Cell ID
- GNSS: Global Navigation Satellite System
- GPS: Global Positioning System
- LCS: LoCation Service
- LMF: Location Management Function
- LPP: LTE Positioning Protocol
- MO-LR: Mobile Originated Location Request
- MT-LR: Mobile Terminated Location Request
- NRPPa: NR Positioning Protocol A
- OTDOA: Observed Time Difference Of Arrival
- PDU: Protocol Data Unit
- PRS: Positioning Reference Signal
- RRM: Radio Resource Management
- RSSI: Received Signal Strength Indicator
- RSTD: Reference Signal Time Difference
- ToA: Time of Arrival
- TP: Transmission Point
- TRP: Transmission and Reception Point
- UE: User Equipment
- SS: Search Space
- CSS: Common Search Space
- USS: UE-specific Search Space
- PDCCH: Physical Downlink Control Channel
- PDSCH: Physical Downlink Shared Channel;
- PUCCH: Physical Uplink Control Channel;
- PUSCH: Physical Uplink Shared Channel;
- DCI: Downlink Control Information
- UCI: Uplink Control Information
- SI: System Information
- SIB: System Information Block
- MIB: Master Information Block
- RRC: Radio Resource Control
- DRX: Discontinuous Reception
- RNTI: Radio Network Temporary Identifier
- CSI: Channel state information
- PCell: Primary Cell
- SCell: Secondary Cell
- PSCell: Primary SCG (Secondary Cell Group) Cell
- CA: Carrier Aggregation
- WUS: Wake up Signal
- TX: Transmitter
- RX: Receiver
- RSTD: Reference Signal Time Difference
- RS: Reference Signal
- PRS: Positioning Reference Signal
- SRS: Sounding Reference Signal

In a wireless communication system, a user equipment (UE) receives information through downlink (DL) from a base station (BS) and transmit information to the BS through uplink (UL). The information transmitted and received by the BS and the UE includes data and various control information and includes various physical channels according to type/usage of the information transmitted and received by the UE and the BS.

FIG. 1 illustrates physical channels used in a 3GPP NR system and a general signal transmission method using the same.

When a UE is powered on again from a power-off state or enters a new cell, the UE performs an initial cell search procedure, such as establishment of synchronization with a BS, in step S101. To this end, the UE receives a synchronization signal block (SSB) from the BS. The SSB includes a primary synchronization signal (PSS), a secondary synchronization signal (SSS), and a physical broadcast channel (PBCH). The UE establishes synchronization with the BS based on the PSS/SSS and acquires information such as a cell identity (ID). The UE may acquire broadcast information in a cell based on the PBCH. The UE may receive a DL reference signal (RS) in an initial cell search procedure to monitor a DL channel status.

After initial cell search, the UE may acquire more specific system information by receiving a physical downlink control channel (PDCCH) and receiving a physical downlink shared channel (PDSCH) based on information of the PDCCH in step S102.

The UE may perform a random access procedure to access the BS in steps S103 to S106. For random access, the UE may transmit a preamble to the BS on a physical random access channel (PRACH) (S103) and receive a response message for preamble on a PDCCH and a PDSCH corresponding to the PDCCH (S104). In the case of contention-based random access, the UE may perform a contention resolution procedure by further transmitting the PRACH (S105) and receiving a PDCCH and a PDSCH corresponding to the PDCCH (S106).

After the foregoing procedure, the UE may receive a PDCCH/PDSCH (S107) and transmit a physical uplink shared channel (PUSCH)/physical uplink control channel (PUCCH) (S108), as a general downlink/uplink signal transmission procedure. Control information transmitted from the UE to the BS is referred to as uplink control information (UCI). The UCI includes hybrid automatic repeat and request acknowledgement/negative-acknowledgement (HARQ-ACK/NACK), scheduling request (SR), channel state information (CSI), etc. The CSI includes a channel quality indicator (CQI), a precoding matrix indicator (PMI), a rank indicator (RI), etc. While the UCI is transmitted on a PUCCH in general, the UCI may be transmitted on a PUSCH when control information and traffic data need to be simultaneously transmitted. In addition, the UCI may be aperiodically transmitted through a PUSCH according to request/command of a network.

FIG. 2 illustrates a radio frame structure. In NR, uplink and downlink transmissions are configured with frames. Each radio frame has a length of 10 ms and is divided into two 5-ms half-frames (HF). Each half-frame is divided into five 1-ms subframes (SFs). A subframe is divided into one or more slots, and the number of slots in a subframe depends on subcarrier spacing (SCS). Each slot includes 12 or 14 Orthogonal Frequency Division Multiplexing (OFDM) symbols according to a cyclic prefix (CP). When a normal CP is used, each slot includes 14 OFDM symbols. When an extended CP is used, each slot includes 12 OFDM symbols.

Table 1 exemplarily shows that the number of symbols per slot, the number of slots per frame, and the number of slots per subframe vary according to the SCS when the normal CP is used.

[Table 1]

| SCS ($15*2^u$) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |
| $N^{slot}_{symb}$: Number of symbols in a slot<br>$N^{frame,u}_{slot}$: Number of slots in a frame<br>$N^{subframe,u}_{slot}$: Number of slots in a subframe | | | |

Table 2 illustrates that the number of symbols per slot, the number of slots per frame, and the number of slots per subframe vary according to the SCS when the extended CP is used.

[Table 2]

| SCS ($15*2^u$) | $N^{slot}_{symb}$ | $N^{frame,u}_{slot}$ | $N^{subframe,u}_{slot}$ |
|---|---|---|---|
| 60KHz (u=2) | 12 | 40 | 4 |

The structure of the frame is merely an example. The number of subframes, the number of slots, and the number of symbols in a frame may vary.

In the NR system, OFDM numerology (e.g., SCS) may be configured differently for a plurality of cells aggregated for one UE. Accordingly, the (absolute time) duration of a time resource (e.g., an SF, a slot or a TTI) (for simplicity, referred to as a time unit (TU)) consisting of the same number of symbols may be configured differently among the aggregated cells. Here, the symbols may include an OFDM symbol (or a CP-OFDM symbol) and an SC-FDMA symbol (or a discrete Fourier transform-spread-OFDM (DFT-s-OFDM) symbol).

FIG. 3 illustrates a resource grid of a slot. A slot includes a plurality of symbols in the time domain. For example, when the normal CP is used, the slot includes 14 symbols. However, when the extended CP is used, the slot includes 12 symbols. A carrier includes a plurality of subcarriers in the frequency domain. A resource block (RB) is defined as a plurality of consecutive subcarriers (e.g., 12 consecutive subcarriers) in the frequency domain. A bandwidth part (BWP) may be defined to be a plurality of consecutive physical RBs (PRBs) in the frequency domain and correspond to a single numerology (e.g., SCS, CP length, etc.). The carrier may include up to N (e.g., 5) BWPs. Data communication may be performed through an activated BWP, and only one BWP may be activated for one UE. In the resource grid, each element is referred to as a resource element (RE), and one complex symbol may be mapped to each RE.

FIG. 4 illustrates an example of mapping physical channels in a slot. In an NR system, a frame is characterized by a self-contained structure in which all of a DL control channel, DL or UL data, and a UL channel may be included in one slot. For example, the first N symbols of a slot may be used to carry a DL channel (e.g., PDCCH) (hereinafter, referred to as a DL control region), and the last M symbols of the slot may be used to carry a UL channel (e.g., PUCCH) (hereinafter, referred to as a UL control region). Each of N and M is an integer equal to or larger than 0. A resource area (hereinafter, referred to as a data region) between the DL control region and the UL control region may be used to transmit DL data (e.g., PDSCH) or UL data (e.g., PUSCH). A guard period (GP) provides a time gap for switching from a transmission mode to a reception mode or from the reception mode to the transmission mode. Some symbols at a DL-to-UL switching time in a subframe may be configured as a GP.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g. a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

FIG. 5 illustrates an exemplary PDSCH reception and ACK/NACK transmission process. Referring to FIG. 5, the UE may detect a PDCCH in slot #n. The PDCCH includes DL scheduling information (e.g., DCI format 1_0 or DCI format 1_1), and indicates a DL assignment-to-PDSCH offset, K0 and a PDSCH-HARQ-ACK reporting offset, K1. After receiving a PDSCH in slot #(n+K0) according to the scheduling information of slot #n, the UE may transmit UCI on a PUCCH in slot #(n+K1). The UCI may include an HARQ-ACK response to the PDSCH. In the case where the PDSCH is configured to carry one TB at maximum, the HARQ-ACK response may be configured in one bit. In the case where the PDSCH is configured to carry up to two TBs, the HARQ-ACK response may be configured in 2 bits if spatial bundling is not configured and in 1 bit if spatial bundling is configured. When slot #(n+K1) is designated as an HARQ-ACK transmission timing for a plurality of PDSCHs, UCI transmitted in slot #(n+K1) includes HARQ-ACK responses to the plurality of PDSCHs.

FIG. 6 illustrates an exemplary PUSCH transmission procedure. Referring to FIG. 6, the UE may detect a PDCCH in slot #n. The PDCCH includes DL scheduling information (e.g., DCI format 1_0 or 1_1). The UE may then transmit a PUSCH in slot #(n+K2) according to the scheduling information in slot #n. The PUSCH includes a UL-SCH TB.

## SRS (sounding reference signal)

The SRS is a UL reference signal transmitted by a UE and received by a BS. Based on the SRS, the BS may perform operations such as link adaptation, DL channel estimation based on channel reciprocity, UL beam management, UL precoding, and/or UL measurement acquisition.

The UE may receive SRS configuration information (e.g., TS38.331 SRS-Config IE) provided by the BS and determine parameters for SRS transmission based thereon. The configuration of the SRS is composed of a list of SRS-Resources, SRS-PosResources, SRS-ResourceSets, and SRS-PosResourcesets, where the SRS-ResourceSets and SRS-PosResourcesets each include sets of SRS-Resources and SRS-PosResources, respectively.

SRSs may be classified into three resource types according to the configuration of the time resources and transmission method.

When the resource type is set as periodic, the UE determines the position where the SRS resource configured through RRC is transmitted based on the configured period and offset, and periodically transmits, when configured, the SRS without separate signaling.

When the resource type is set as semi-persistent, the UE determines the position where the SRS resource configured through RRC is transmitted based on the configured period and offset. Then, when transmission of the SRS is activated by MAC CE, the UE starts periodic transmission of the indicated SRS. When the transmission is deactivated by MAC CE, the UE stops transmitting the SRS.

When the resource type is set as aperiodic, the UE transmits the indicated SRS in consideration of the position of the offset configured through RRC with respect to the reception timing of the DCI indicating triggering of the corresponding SRS resource set.

## Positioning

Positioning may refer to determining the geographical position and/or velocity of the UE based on measurement of radio signals. Location information may be requested by and reported to a client (e.g., an application) associated with to the UE. The location information may also be requested by a client within or connected to a core network. The location information may be reported in standard formats such as formats for cell-based or geographical coordinates, together with estimated errors of the position and velocity of the UE and/or a positioning method used for positioning.

FIG. 7 is a diagram illustrating an exemplary positioning protocol configuration for positioning a UE, to which various embodiments are applicable.

Referring to FIG. 7, an LTE positioning protocol (LPP) may be used as a point-to-point protocol between a location server (E-SMLC and/or SLP and/or LMF) and a target device (UE and/or SET), for positioning the target device using position-related measurements obtained from one or more reference resources. The target device and the location server may exchange measurements and/or location information based on signal A and/or signal B over the LPP.

NRPPa may be used for information exchange between a reference source (access node and/or BS and/or TP and/or NG-RAN node) and the location server.

The NRPPa protocol may provide the following functions.

- E-CID Location Information Transfer. This function allows the reference source to exchange location information with the LMF for the purpose of E-CID positioning.
- OTDOA Information Transfer. This function allows the reference source to exchange information with the LMF for the purpose of OTDOA positioning.
- Reporting of General Error Situations. This function allows reporting of general error situations, for which function-specific error messages have not been defined.

Positioning methods supported in the NG-RAN may include a GNSS, an OTDOA, an E-CID, barometric sensor positioning, WLAN positioning, Bluetooth positioning, a TBS, uplink time difference of arrival (UTDOA) etc. Although any one of the positioning methods may be used for UE positioning, two or more positioning methods may be used for UE positioning.

### OTDOA (Observed Time Difference of Arrival)

FIG. 8 is a diagram illustrating an observed time difference of arrival (OTDOA) positioning method, to which various embodiments are applicable;

The OTDOA positioning method uses time measured for DL signals received from multiple TPs including an eNB, an ng-eNB, and a PRS-only TP by the UE. The UE measures time of received DL signals using location assistance data received from a location server. The position of the UE may be determined based on such a measurement result and geographical coordinates of neighboring TPs.

The UE connected to the gNB may request measurement gaps to perform OTDOA measurement from a TP. If the UE is not aware of an SFN of at least one TP in OTDOA assistance data, the UE may use autonomous gaps to obtain an SFN of an OTDOA reference cell prior to requesting measurement gaps for performing reference signal time difference (RSTD) measurement.

Here, the RSTD may be defined as the smallest relative time difference between two subframe boundaries received from a reference cell and a measurement cell. That is, the RSTD may be calculated as the relative time difference between the start time of a subframe received from the measurement cell and the start time of a subframe from the reference cell that is closest to the subframe received from the measurement cell. The reference cell may be selected by the UE.

For accurate OTDOA measurement, it is necessary to measure time of arrival (ToA) of signals received from geographically distributed three or more TPs or BSs. For example, ToA for each of TP 1, TP 2, and TP 3 may be measured, and RSTD for TP 1 and TP 2, RSTD for TP 2 and TP 3, and RSTD for TP 3 and TP 1 are calculated based on three ToA values. A geometric hyperbola is determined based on the calculated RSTD values and a point at which curves of the hyperbola cross may be estimated as the position of the UE. In this case, accuracy and/or uncertainty for each ToA measurement may occur and the estimated position of the UE may be known as a specific range according to measurement uncertainty.

For example, RSTD for two TPs may be calculated based on Equation 1 below.

[Equation 1]

$$RSTDi,_1 = \frac{\sqrt{(x_t - x_i)^2 + (y_t - y_i)^2}}{c} - \frac{\sqrt{(x_t - x_1)^2 + (y_t - y_1)^2}}{c} + (T_i - T_1) + (n_i - n_1)$$

In Equation 1, c is the speed of light, {xt, yt} are (unknown) coordinates of a target UE, {$x_i$, $y_i$} are (known) coordinates of a TP, and {$x_l$, $y_l$} are coordinates of a reference TP (or another TP). Here, ($T_i$-$T_l$) is a transmission time offset between two TPs, referred to as "real time differences" (RTDs), and $n_i$ and $n_1$ are UE ToA measurement error values.

E-CID (Enhanced Cell ID)

In a cell ID (CID) positioning method, the position of the UE may be measured based on geographical information of a serving ng-eNB, a serving gNB, and/or a serving cell of the UE. For example, the geographical information of the serving ng-eNB, the serving gNB, and/or the serving cell may be acquired by paging, registration, etc.

The E-CID positioning method may use additional UE measurement and/or NG-RAN radio resources in order to improve UE location estimation in addition to the CID positioning method. Although the E-CID positioning method partially may utilize the same measurement methods as a measurement control system on an RRC protocol, additional measurement only for UE location measurement is not generally performed. In other words, an additional measurement configuration or measurement control message may not be provided for UE location measurement. The UE does not expect that an additional measurement operation only for location measurement will be requested and the UE may report a measurement value obtained by generally measurable methods.

For example, the serving gNB may implement the E-CID positioning method using an E-UTRA measurement value provided by the UE.

Measurement elements usable for E-CID positioning may be, for example, as follows.

UE measurement: E-UTRA reference signal received power (RSRP), E-UTRA reference signal received quality (RSRQ), UE E-UTRA reception (Rx)-transmission (Tx) time difference, GERAN/WLAN reference signal strength indication (RSSI), UTRAN common pilot channel (CPICH) received signal code power (RSCP), and/or UTRAN CPICH Ec/Io

E-UTRAN measurement: ng-eNB Rx-Tx time difference, timing advance ($T_{ADV}$), and/or AoA

Here, $T_{ADV}$ may be divided into Type 1 and Type 2 as follows.

$T_{ADV}$ Type 1 = (ng-eNB Rx-Tx time difference)+(UE E-UTRA Rx-Tx time difference)

$T_{ADV}$ Type 2 = ng-eNB Rx-Tx time difference

AoA may be used to measure the direction of the UE. AoA is defined as the estimated angle of the UE counterclockwise from the eNB/TP. In this case, a geographical reference direction may be north. The eNB/TP may use a UL signal such as an SRS and/or a DMRS for AoA measurement. The accuracy of measurement of AoA increases as the arrangement of an antenna array increases. When antenna arrays are arranged at the same interval, signals received at adjacent antenna elements may have constant phase rotate.

UTDOA (Uplink Time Difference of Arrival)

UTDOA is a method of determining the location of a UE by estimating the arrival time of the SRS. When calculating the estimated SRS arrival time, the location of the UE can be estimated through an arrival time difference with another cell (or base station/TP) by using the serving cell as a reference cell. To implement UTDOA, the E-SMLC may indicate a serving cell of the target UE in order to instruct the target UE to transmit SRS. In addition, E-SMLC can provide configuration such as periodic/aperiodic SRS, bandwidth and frequency/group/sequence hopping.

Multi RTT (round trip time)

FIG. 9 is a diagram illustrating an exemplary multi-round trip time (multi-RTT) positioning method to which various embodiments are applicable.

Referring to FIG. 9(a), an exemplary RTT procedure is illustrated, in which an initiating device and a responding device perform ToA measurements, and the responding device provides ToA measurements to the initiating device, for RTT measurement (calculation). The initiating device may be a TRP and/or a UE, and the responding device may be a UE and/or a TRP.

The initiating device may transmit an RTT measurement request, and the responding device may receive the RTT measurement request (1301).

The initiating device may transmit an RTT measurement signal at $t_0$ and the responding device may acquire a ToA measurement t1(1303).

The responding device may transmit an RTT measurement signal at t2 and the initiating device may acquire a ToA measurement t3 (1305).

The responding device may transmit information about [t2-t1], and the initiating device may receive the information and calculate an RTT by Equation 2 (1307). The information may be transmitted and received based on a separate signal or in the RTT measurement signal (1305).

[Equation 2]

$$\mathrm{RTT} = t_3 - t_0 - [t_2 - t_1]$$

Referring to FIG. 9(b), an RTT may correspond to a double-range measurement between two devices. Positioning estimation may be performed from the corresponding information, and multilateration may be used for the positioning estimation. $d_1$, $d_2$, and $d_3$ may be determined based on the measured RTT, and the location of a target device may be determined to be the intersection of the circumferences of circles with radiuses of $d_1$, $d_2$, and $d_3$, in which $BS_1$, $BS_2$, and $BS_3$ (or TRPs) are centered, respectively.

NG-RAN Positioning Architecture and Procedures

FIG. 10 illustrates a positioning structure of a next generation (NG) radio access network (RAN). The NG RAN may be referred to as a NR RAN or 5G RAN.

An AMF may receive a request for location services related to a specific target UE from other entities (e.g., gateway mobile location centre (GMLC) or UE) or may decide to initiate the location services itself on behalf of the specific target UE (e.g., in the case of IP multimedia subsystem (IMS) emergency calls). Subsequently, the AMF may forward the location service request to an LMF. The LMF may process the location service request, where processing the location service request may include transmitting assistance data to the target UE for UE-based and/or UE-assisted positioning and/or positioning of the target UE. The LMF transmits location service results (e.g., location estimates for the UE) to the AMF. When the location services are requested by other entities (e.g., GMLC or UE), the AMF transmits the location service results to the other entities.

An NG-RAN node may control TRPs/TPs such as RRM or DL-PRS only TPs to support a PRS-based terrestrial beacon system (TBS).

The LMF may be connected to an enhanced serving mobile location centre (E-SMLC) to access universal terrestrial radio access network (UTRAN) information.

The LMF can be connected to a secure user plane location (SUPL) location platform (SLP), which is responsible for positioning relative to the user plane.

FIG. 11 illustrates an example of location services supported in a NG-RAN.

When a UE is in a connection management idle (CM-IDLE) state, if an AMF receives a location service request, the AMF performs a network trigger service request to configure signaling for a connection to the UE and allocation of a specific serving gNB/ng-eNB. In FIG. 11, it is assumed that the UE is in the connected mode.

Location service requests for the UE may be triggered, and the requests for the UE may be one of steps 1101, 1102, and 1103. For example, an entity in a 5GC such as a GMLC may request location services (e.g., positioning) for a target UE from a serving AMF (1101). Alternatively, the serving AMF may trigger location services (e.g., to find the UE for emergency calls) for the target UE itself (1102). Further, the UE may request location services (e.g., positioning or assistance data transfer) from the serving AMF at the NAS level (1103).

The AMF forwards the location service request to an LMF (1104).

The LMF provides services in the NG-RAN to acquire location measurements or assistance data and initiates a positioning procedure with a neighboring ng-eNB/gNBs (1105).

(Instead of or additionally to step 1105) The LMF initiates the positioning procedure with the UE to obtain location estimates or positioning measurements or transmit location assistance data to the UE (1106).

The LMF provides a location service response to the AMF (1107) (e.g., success or failure and location estimates for the UE if obtained).

(In step 1101) The AMF provides the location service response to the 5GC entity (1108) (e.g., location estimates for the UE).

(In step 1102) The AMF supports the services triggered in step 1102 based on the location service response received in step 1107 (1109) (e.g., providing location estimates related to emergency calls to the GMLC).

(In step 1103) The AMF provides the location service response to the UE (1110) (e.g., location estimates for the UE).

## SRS (sounding reference signal) for positioning

In Rel. 15 NR systems, periodic, aperiodic, and semi-persistent Rel. 15 SRSs may be transmitted for UL relative time of arrival (UL RTOA), UL SRS-RSRP, and UL-AOA measurements at the BS, thereby supporting UL TDOA and UL AOA.

In Rel. 16/17 NR systems, periodic, aperiodic, and semi-persistent SRSs for positioning may be transmitted for UL RTOA, UL SRS-RSRP, UL-AOA, and gNB Rx-Tx time difference measurements at the BS, thereby supporting for UL TDOA, UL AOA, and multi-RTT.

Depending on the purpose of use of the SRS, RRC parameters are configured differently. For example, for an SRS for positioning, the configuration is indicated by SRS-PosResources and SRS-PosResourceSet. For SRSs used for other purposes (e.g., Rel.15 SRS), the configuration is indicated by SRS-Resources and SRS-ResourceSet.

Hereinafter, to avoid confusion between the SRS for positioning and the SRS for other purposes, the SRS for positioning is referred to as SRS-p, and the SRS used for other purposes (e.g., beam management) is referred to as SRS-m. In the new proposals of the present disclosure discussed below, the SRS may be interpreted as SRS-p, unless stated otherwise.

The method of mapping SRS resources in the time/frequency domain on a resource grid (e.g., FIG. 3) is defined in the standards documents. For SRS-m, repetition within a slot may be configured, and intra-slot frequency hopping based thereon is supported. However, for SRS-p, repetition within a slot cannot be configured according to the current NR standard (Rel-17), and intra-slot frequency hopping is not supported. For a periodic/semi-persistent SRS-m, inter-slot frequency hopping is supported in a periodic manner.

The SRS-p configuration may be provided based on the serving cell (or camp-on cell) of the UE, and the SRS-p transmitted by the UE based on the SRS-p configuration may be received by one or more cells (or TRPs), including the serving cell.

As an example, the SRS-p may be configured through the RRC parameters SRS-PosResourceSet and SRS-PosResource defined in the TS 38.331 standard. Specifically, when a higher layer parameter SRS-PosResource is configured for the SRS (i.e., SRS-p), and a higher layer parameter SpatialRelationInfoPos is configured, the ID of the configuration field for the reference RS is provided. The reference RS may be an SRS configured by the higher layer parameter SRS-Resource or SRS-PosResource, CSI-RS, SS/PBCH block, DL PRS of the serving cell, or DL PRS configured in the SS/PBCH block.

The UE is not expected to transmit multiple SRS resources with different spatial relationships on the same OFDM symbol.

If the higher layer parameter SpatialRelationInfoPos is not configured, the UE may use either a fixed spatial domain transmission filter or a different spatial domain transmission filter to transmit the SRS-p configured by the higher layer parameter SRS-PosResource across multiple SRS resources.

In the RRC_CONNECTED mode, the UE transmits the SRS-p configured by the higher layer parameter SRS-PosResource within an active UL BWP.

Only one RS source is provided for the higher layer parameter SpatialRelationInfoPos provided for each SRS-p resource.

In the case of operation on the same carrier, if the SRS-p conflicts with a scheduled PUSCH, the SRS-p is dropped on symbols where the collision occurs.

The UE does not expect that SRS-PosResource will be configured on the carrier of the serving cell with a slot format consisting of DL/UL symbols that are not configured for PUSCH/PUCCH transmission.

Depending on UE capabilities, SRS-p resources associated with an initial UL BWP may be configured, and the SRS-p resources are transmitted within the initial UL BWP in the RRC_INACTIVE mode with the same CP and SCS as configured for the initial UL BWP. Depending on UE capabilities, SRS-p resources for positioning may be configured outside the initial BWP in the RRC_INACTIVE mode, and a frequency location, bandwidth, SCS, and CP length may be configured for SRS-p transmission. The SRS-p resources configured outside the initial BWP in the RRC_INACTIVE mode are configured in the same bandwidth and CC as the initial UL BWP.

**ISAC (Integrated Sensing and Communication)**

Various methods for using wireless sensing are being widely discussed in recent wireless communication systems. In general, the conventional radar technology may be considered for the purpose of wireless sensing. However, there may be constraints associated with radar technology for sensing, as it is specialized for sensing and may not consider the characteristics of communication. Additionally, separate devices may be required for transmitting and receiving nodes to transmit and receive signals for wireless sensing. To address these issues, methods for using wireless sensing in wireless communication systems that support cellular networks, such as 5G and/or next-generation 6G, are actively being researched. For example, these methods include integrated sensing and communication (ISAC) or joint communication and sensing (JCAS).

In 3GPP standardization, studies for supporting ISAC in 5G/6G have been initiated. According to TR 22.837 published by 3GPP SA1 WG, wireless sensing is defined as a technology that uses radio waves to measure a distance, angle, or instantaneous velocity for the purpose of acquiring information on the environment and/or surrounding objects. A scenario where sensing and communication share the same frequency band and hardware is being considered. In addition, methods of sharing or reusing radio waves intended for communication (e.g., RSs for communication such as an SSB, DMRS, CSI-RS, and/or SRS) for radio waves for sensing or methods of designing separate radio waves for wireless sensing may also be considered.

In general, wireless sensing supported in ISAC involves a process where signals transmitted from the transmitter are reflected off a target object and received by the receiver. Depending on the relationship between the transmitter and receiver, different sensing modes may be defined. Based on whether the transmitter and receiver are matched, a case where the transmitter and receiver are matched may be defined as a mono-static sensing mode, and a case where the transmitter and receiver are not matched may be defined as a bi-static sensing mode.

FIG. 12 illustrates examples of wireless sensing modes supported in ISAC.

Referring to FIG. 12, considering the transmission and reception operations in the 3GPP standard and the nodes participating therein, sensing modes may be broadly categorized as follows.

(a) BS mono-static sensing mode: A BS that transmits a radio wave receives a reflected signal.
(b) BS-to-BS bi-static sensing mode: Another BS receives a reflected signal of a radio wave transmitted by a specific BS.
(c) BS-to-UE bi-static sensing mode: A UE receives a reflected signal of a radio wave transmitted by a BS.
(d) UE mono-static sensing mode: A UE that transmits a radio wave receives a reflected signal.
(e) UE-to-UE bi-static sensing mode: Another UE receives a reflected signal of a radio wave transmitted by a specific transmitting UE.
(f) UE-to-BS bi-static sensing mode: A BS receives a reflected signal of a radio wave transmitted by a transmitting UE.

In addition to the six use cases described above, a sensing mode including multiple transmitting/receiving nodes may be referred to a multi-static sensing mode.

The application of wireless sensing through ISAC/JCAS is being considered in various scenarios. Generally, wireless sensing is considered for the purpose of acquiring information on a target with no communication module (or independent of communication modules). For example, considerable scenarios may be broadly divided into three scenarios.

(1) Object detection and tracking: This scenario aims to detect target objects or people and track location information. For example, the following scenarios: intrusion detection in indoor/outdoor environments, tracking the position of an unmanned aerial vehicle (UAV) or automated guided vehicle (AGV), and supporting autonomous driving may be considered.
(2) Environment monitoring: This scenario aims to collect information on the surrounding environment of transmitting/receiving nodes. For example, the following scenarios: rainfall observation and flood detection may be considered.
(3) Motion monitoring: This scenario aims to detect the motion of a target. For example, scenarios for distinguishing human movements or gestures may be considered.

The performance metrics and levels required for each of the above scenarios may vary and differ from one another. To design suitable ISAC/JCAS for the service quality required for each scenario, various key performance requirements need to be considered. In the 3GPP standard, TS 22.137, key performance requirements required for each service scenario are defined as follows: positioning estimation accuracy, velocity estimation accuracy, reliability (confidence level), sensing resolution, missed detection probability, false alarm probability, maximum sensing service delay, and refreshing rate. The required levels for each key performance requirement may vary depending on the service scenario.

Since the radio frequency sensing function does not require connection to objects through devices in the network, it may provide services for object positioning without the need for a device. The capability to obtain range, speed, and angle information from radio frequency signals may enable a wide range of new functions such as object sensing, recognition of objects (e.g., vehicles, humans, animals, UAVs), high-precision positioning, tracking, and activity recognition. Wireless sensing services may provide information for various industries (e.g., unmanned aerial vehicles, smart homes, V2X, factories, railways, public safety, etc.), enabling applications such as intruder sensing, assisted driving and navigation, trajectory tracking, collision avoidance, traffic control, and health and transportation management. In some cases, wireless sensing may employ non-3GPP type sensors (e.g., radar, camera) to additionally support 3GPP-based sensing. For example, the operation of wireless sensing services, namely, the sensing operations, may rely on transmission, reflection, and scattering processing of wireless sensing signals. Therefore, wireless sensing may provide an opportunity to enhance conventional communication systems from communication networks into wireless communication and sensing networks.

FIGS. 13 and 14 illustrate examples in which ISAC is applied to a 3GPP wireless communication system. The embodiment of FIGS. 13 and 14 may be combined with various embodiments of the present disclosure. Specifically, FIG. 13 illustrates an example of sensing using a sensing receiver and a sensing transmitter present at the same location (e.g., monostatic sensing), and FIG. 14 illustrates an example of sensing using a sensing receiver and a sensing transmitter separated from each other (e.g., bistatic sensing).

The proposals discussed below are also applicable to the ISAC environment described above.

**Frequency hopping (FH) of SRS for positioning**

3GPP has been conducting standardization and technology development to support various types of devices such as MTC/NB-IoT as well as conventional handheld UEs. One of these technologies is Reduced Capability (hereinafter, RedCap) NR, which was introduced in Rel-17. It lowers the capabilities of existing NR to cut costs, is less sensitive to data rates, and has lower latency requirements. Terminals that support the RedCap may include wearables, industrial wireless sensors, and video surveillance systems. They achieve capability gains through reduced supported bandwidth, reduced maximum supported numbers of MIMO layers, modulation orders, and Rx branches, and support for half-duplex (HD) in all bands.

In the current 3GPP NR Rel-18 standard, the target requirement for positioning accuracy for RedCap UEs is disclosed below. In most experiments, the target performance requirements in Table 3 below were not met. Since RedCap UEs support a smaller maximum frequency bandwidth than normal UEs that support existing NR, they may exhibit degraded performance in terms of decoding/detection accuracy of the transmitted/received reference signals. Accordingly, frequency hopping has been discussed as a key solution to improve the positioning accuracy of RedCap UEs. In the current NR Rel-17 standard, the frequency hopping operation through RRC parameter configuration is supported for SRS for MIMO resource(s), but not supported for SRS for positioning resource(s).

[Table 3]

| | commercial use cases | IIoT use cases |
|---|---|---|
| Horizontal positioning accuracy | (< 3 m) for 90% of UEs | (< 1 m) for 90% of UEs |
| Vertical positioning accuracy | (< 3 m) for 90% of UEs | (< 3 m) for 90% of UEs |

In consideration of these characteristics and issues, methods for frequency hopping operation and related signaling are proposed to support improvement of accuracy performance of UL SRS-based positioning techniques for RedCap UEs. Specifically, to support improvement of accuracy in SRS-based positioning of RedCap UEs, a method for performing the frequency hopping operation for uplink signals transmitted from the UE to the BS, and a signaling and reporting method for the operation are proposed. Additionally, a frequency hopping scheme that supports overlapping is proposed for phase compensation between hops during the frequency hopping operation.

Although the methods proposed in the present disclosure are described focusing on a UL SRS-based positioning technique in the 3GPP NR system, the proposed methods are not limited thereto. They may be generally applied to other positioning techniques capable of measuring UE positioning and various RSs. The proposed methods may be applied to all types of transmission/reception schemes and positioning techniques expected by the BS and the UE.

The methods proposed in the present disclosure may be implemented independently without any combination, or one or more of the methods may be combined and implemented in an associated manner. Some terms, symbols, and sequences used herein may be replaced with other terms, symbols, and sequences.

[Proposal 11 Frequency hopping operation within a virtual bandwidth range

To support improvement of accuracy of SRS based positioning for RedCap UEs, a method of performing the frequency hopping operation within a virtual bandwidth range for signals transmitted from a UE to the BS is proposed.

As described above, since RedCap UEs support a smaller frequency bandwidth than normal UEs, a method may be considered in which the UE obtains combining gain by performing frequency hopping within a virtual bandwidth range that is wider than the supported BW. Here, the virtual bandwidth range refers to the entire frequency bandwidth over which all hops are transmitted when a single SRS resource for positioning (hereinafter referred to as "SRS-p resource") is transmitted through hopping in the frequency domain. The virtual frequency range may be wider than the maximum supported frequency bandwidth for the RedCap UE and may be defined as a dedicated bandwidth for SRS-p frequency hopping. Thus, when performing frequency hopping, this bandwidth size may be applied instead of the BWP size used to transmit other signals/channels. The virtual frequency bandwidth is configured per SBWP. The virtual frequency bandwidth may be configured in various forms. To this end, a configuration method for the SRS-p resource(s)/set may be defined, and specific SRS-p resource(s)/set transmission/reception of the BS and UE may be proposed accordingly.

For frequency resource allocation for transmission and reception between the UE and BS, configuration information related to the resources is delivered through RRC signaling. In the current NR Rel-17 standard, frequency hopping is supported by the RRC configuration information related to SRS resource(s) for MIMO (hereinafter referred to as "SRS-m resource(s)"), but parameters related to frequency hopping configuration are not included in the RRC configuration information related to the SRS-p resource(s)/set. To support frequency hopping of the SRS-p resource(s)/set, the configuration for frequency hopping within a virtual bandwidth range may be indicated either per resource or per resource set. The indication methods are described as CASE 1 and CASE 2, respectively.

CASE 1. Configuration per resource

Configuration may be indicated per SRS-p resource. In this case, two approaches may be considered: using existing SRS-p resource-related RRC configuration parameters to indicate the frequency hopping operation, and defining new SRS-p resource parameters that provide functionality similar to the operation of the RRC configuration parameters for SRS resources. The approaches are described below in Option 1 and Option 2, respectively.

(i) Option 1) Utilizing the existing SRS-p resource-related RRC configuration parameters

As a method for per-resource configuration for frequency hopping within the virtual bandwidth range, existing SRS-p resource-related RRC configuration parameters may be used to indicate the configuration. The SRS-p resource-related RRC configuration parameters include parameters with extensibility to support frequency hopping in the future. Such parameters may be used to support frequency hopping configuration for RedCap UEs. For example, a frequency hopping pattern may be configured using a c-srs parameter, which is also supported in the SRS-p resource-related RRC configuration parameters. The parameter may be used as an index to set the entire bandwidth for frequency hopping and the bandwidth for each hop, which may be defined in a new SRS bandwidth and frequency hopping bandwidth-related configuration table. The table may be defined considering the capability of the UE. The table may be applied differently depending on the configured numerology of the UE. To reduce transmission overhead of the configuration parameters, the offset of the first hop may be fixed, or the hopping pattern may be configured as a sequential staircase pattern.

FIG. 15 illustrates operations of a UE in the proposed method. Referring to FIG. 15, the UE may acquire configuration information related to the SRS-p resource(s) provided by the BS (1505). The UE may determine a frequency hopping pattern based on the configuration information related to the SRS-p resource(s) (1510), and transmit an SRS-p based thereon (1515). When the UE is a RedCap UE, the UE may receive, through the parameter c-srs configured within the received SRS-p resource, configuration of the SRS bandwidth and frequency hopping pattern used for SRS-p transmission. Specifically, an index indicated by the parameter c-srs may be referenced in a configuration table related to a separate SRS bandwidth and frequency hopping bandwidth defined for the RedCap UE. As a specific example, the table may have a form shown in FIG. 16. In the table, each value of c-srs may be mapped to a value of BW_hop indicating the bandwidth for each hop and a value of BW_SRS indicating the entire virtual bandwidth used to transmit the SRS-p resource, thereby specifying the hopping pattern. Then, the UE transmits the SRS-p resource at the positions(s) of the configured/indicated frequency resources at the configured/indicated SRS-p resource transmission time.

FIG. 17 illustrates operations of a BS in the proposed method. Referring to FIG. 17, the BS may determine configuration information related to the SRS-p resource(s) indicated by the LMF (1705), and provide the same to the UE (1710). The BS may receive an SRS-p from the UE (1715). When the target UE is a RedCap UE, the BS may configure an SRS bandwidth and frequency hopping pattern for SRS-p transmission through the parameter c-srs in the SRS-p resource to be transmitted and transmit the same. Specifically, configuration and transmission may be performed by referencing an index indicated by the parameter c-srs in a configuration table related to a separate SRS bandwidth and frequency hopping bandwidth defined for the RedCap UE. Thereafter, the BS receives the SRS-p resource transmitted by the UE at the position(s) of the configured/indicated frequency resources at the configured/indicated SRS-p resource transmission time, performs measurements for positioning by combining the received hops, and then reports the measurements to the LMF.

The LMF may deliver the configuration information related to the SRS-p resource(s) via the BS. The LMF receives, from the BS, a report on positioning-related measurement(s) performed using the SRS-p resource transmitted from the UE. Based on the measurement(s), the LMF may estimate the location of the UE through calculation.

The proposed method may be advantageous in that it does not require addition/change of other configuration methods, including RRC configuration parameters, as a new frequency hopping configuration table is defined. Also, it allows frequency hopping to be configured using a parameter of fewer bits than SRS resources according to the numerology.

<u>(ii) Option 2) Defining new parameters that provide functions similar to SRS resource-related RRC configuration parameters</u>

As another method that may be considered, a new SRS-p resource parameter that provides a function similar to the operation of the SRS resource-related RRC configuration parameters may be defined by per-resource configuration for frequency hopping within a virtual bandwidth range to provide an instruction for the frequency hopping operation. In the current NR Rel-17 standard, the parameters c-srs, b-srs, and b-hop for configuring a frequency hopping pattern are included in the parameter FreqHopping among the SRS resource-related RRC configuration parameters. A specific frequency hopping pattern is configured by a configuration of the values of the parameters. Similarly, new parameters supporting similar functions may also be defined for the SRS-p resource. In this regard, in the case where the configured bandwidth for hop exceeds the frequency bandwidth supported by the UE, or an entire SRS-p resource transmission bandwidth less than the maximum frequency bandwidth supported by the UE is configured, a separate frequency hopping pattern may be defined to be indicated. For example, new parameters providing functions similar to those of the parameters c-srs, b-srs, and b-hop, which are used to configure a frequency hopping pattern within the parameter FreqHopping among the SRS resource-related RRC configuration parameters supported in the current NR Rel-17 standard, may be defined for the SRS-p resource. In this case, a new configuration table that provides similar functionality to the table for supporting configuration of the transmission and frequency hopping bandwidth of the SRS resource may also be defined for the SRS-p resource. Further, in the proposed configuration table, the values of the configured parameters may be defined to be increased/decreased according to a rule to indicate overlapping frequency hopping in cases unsuitable for the frequency bandwidth supported by the UE mentioned above.

The UE may obtain configuration information related to the SRS-p resource(s) provided by the BS. When the UE is a RedCap UE, the UE may receive, through the parameters c-srs, b-srs, and b-hop configured within the received SRS-p resource, configuration of the SRS bandwidth and frequency hopping pattern used for SRS-p transmission. Specifically, indexes indicated by the parameters c-srs, b-srs, and b-hop may be referenced according to a certain rule in a separate configuration table related to the SRS bandwidth and frequency hopping bandwidth defined for the RedCap UE. As a specific example, in the case where the hop bandwidth is set greater than the frequency bandwidth supported by the RedCap UE in the SRS frequency hopping configuration supported by the current NR Rel-17 standard, the value of the parameter b-srs may be increased to reduce the hop bandwidth, and the operation of overlapping frequency hopping may be newly configured. Alternatively, when an entire SRS-p resource transmission bandwidth is configured to be less than the maximum frequency bandwidth supported by the RedCap UE, the value of the parameter b-hop may be decreased to increase the entire SRS-p resource transmission bandwidth, and the operation of overlapping frequency hopping may be newly configured. Then, the UE transmits the SRS-p resource by performing frequency hopping configured/indicated according to the above-described method at the configured/indicated SRS-p resource time/frequency resources.

The BS may provide the UE with the configuration information related to the SRS-p resource(s) indicated by the LMF. When the target UE is a RedCap UE, the BS may configure an SRS bandwidth, frequency hopping pattern, and the like used for SRS-p transmission through the parameters c-srs, b-srs, and b-hop in the SRS-p resource to be transmitted and transmit the same. Specifically, configuration and transmission may be performed by referencing, based on a certain rule, an index indicated by the parameters c-srs, b-srs, and b-hop in a configuration table related to a separate SRS bandwidth and frequency hopping bandwidth defined for the RedCap UE. Thereafter, the BS receives the SRS-p resource transmitted by the UE at the position(s) of the configured/indicated frequency resources at the configured/indicated SRS-p resource transmission time, performs measurements for positioning by combining the received hops, and then reports the measurements to the LMF.

The LMF may deliver the configuration information related to the SRS-p resource(s) via the BS. The LMF receives, from the BS, a report on positioning-related measurement(s) performed using the SRS-p resource transmitted from the UE. Based on the measurement(s), the LMF may estimate the location of the UE through calculation.

By defining new RRC parameters related to the SRS-p resources, the proposed method may not only support all frequency hopping patterns supported for SRS resources in the existing NR Rel-17 standard, but also additional operations such as overlapping frequency hopping depending on the maximum frequency bandwidth supported by the RedCap UE and the numerology configured for the UE.

CASE 2. Configuration per resource set

Configuration may be indicated per SRS-p resource set. In this case, two approaches may be considered: additionally defining frequency hopping-related parameters in the existing SRS-p resource set information element (IE) to indicate the configuration; and additionally defining a new SRS-p resource set IE for frequency hopping to indicate the configuration. The approaches are described in Option 1 and Option 2, respectively.

(i) Option 1) Additionally defining new frequency hopping-related parameters in the existing SRS-p resource set IE

As a method for per-resource set configuration for frequency hopping within the virtual bandwidth range, new frequency hopping-related parameters may be additionally defined in the existing SRS-p resource set IE to indicate the configuration. For the additionally defined frequency hopping-related parameters, both options proposed in CASE 1 may be applied, and whether these parameters are configured may be determined based on whether frequency hopping is used. By configuring the additionally defined parameters, frequency hopping may be configured for all SRS-p resources within the SRS-p resource set simultaneously.

(ii) Option 2) Additionally defining a new SRS-p resource set IE for frequency hopping

As another method for per-resource set configuration for frequency hopping within the virtual bandwidth range, an SRS-p resource set IE for frequency hopping may be additionally defined for the configuration. The additionally defined SRS-p resource set IE may be configured when use of frequency hopping is indicated. The parameters within the proposed IE may be added by applying both options proposed in CASE 1. By configuring the IE, frequency hopping may be configured for all SRS-p resources within the SRS-p resource set simultaneously, and frequency hopping-related configurations for SRS-p resources may be established based on the additionally defined parameters.

As frequency hopping is configured for all SRS-p resources in the SRS-p resource set simultaneously, the two proposed methods in CASE 2 may reduce the overhead related to adding/configuring frequency hopping-related parameters.

Upon receiving an RRC message from the BS, the UE transmits the SRS-p resources in the SRS-p resource set(s) to the BS through frequency hopping according to the configuration information. The BS may receive the SRS-p resources transmitted from the UE at the position(s) of the configured/indicated frequency resources at the configured/indicated SRS-p resource transmission time, perform measurements for positioning by combining the received hops, and then report the measurements to the LMF. The LMF may receive, from the BS, a report on positioning-related measurement(s) performed based on the SRS-p resources transmitted from the UE, and estimate the location of the UE through calculation based on the measurement(s).

In either CASE 1 or CASE 2, the entire transmission/reception bandwidth of the SRS-p resources for which the UE performs frequency hopping may exceed the maximum frequency bandwidth supported by the UE. The received information obtained by performing the combination in a wide frequency band may be utilized for TDOA/AoA-based positioning of the UE. Accordingly, an advantageous effect may be expected in terms of positioning accuracy performance.

Switching delay

When the UE initially connects to the BS, it may report capability information to the BS. Based on the reported UE capability information, the BS may configure/indicate an appropriate inter-hop switching delay for frequency hopping transmission of SRS-p resource(s) within a virtual bandwidth using an RRC message. For SRS transmission/reception in consideration of the configured/indicated inter-hop switching delay, two options may be considered: one where the BS takes the delay into account during resource allocation, and another where the UE considers the delay during SRS-p transmission. The options are described in Option 1 and Option 2, respectively. FIG. 18 illustrates interaction between the UE and the BS during SRS-p resource allocation.

(i) Option 1) Resource allocation in consideration of inter-hop switching delay

The UE may transmit an SRS-p (resource) request to the BS for SRS-p transmission (1805), and the BS may allocate time/frequency resources for the SRS-p resource(s) to the UE that has transmitted the request based on the current network situation and priority (1810). In this operation, the time resources may be allocated with time resources corresponding to the symbol(s) left unassigned, considering the inter-hop switching delay configured as described above. The UE then transmits the SRS-p resource to the BS using frequency hopping based on the allocated resources.

(ii) Option 2) Dropping some symbol(s) during SRS-p transmission in consideration of inter-hop switching delay

As described above, the UE may transmit an SRS-p (resource) request to the BS for SRS-p transmission (1805), and the BS may allocate time/frequency resources for the SRS-p resource(s) to the UE based on the current network situation and priority (1810). In this operation, the BS may allocate time resources without considering the configured inter-hop switching delay. Then, the UE may transmit the SRS-p resource(s) to the BS through frequency hopping using the allocated resources, dropping some symbol(s) corresponding to the configured inter-hop switching delay from among the SRS-p resource(s).

The configuration/indication of the switching delay may be limited only operated depending on the frequency positions of the starting/ending hops in the frequency hopping. For example, when the frequency position of the starting hop in the frequency hopping is within the UL active BWP, the switching delay immediately before the start of the frequency hopping may not be configured/indicated. Similarly, when the frequency position of the ending hop in the frequency hopping is within the UL active BWP, the switching delay immediately after the end of the frequency hopping may not be configured/indicated.

The operation of configuring/indicating a separate inter-hop switching delay in consideration of the capability of the UE for the proposed frequency hopping within the virtual bandwidth range may allow fewer symbol(s) to be configured/indicated than the DCI/timer-based BWP switch delay supported in the current NR Rel-17 standard, and thus may be advantageous in efficiently allocating time resources.

**[Proposal 21 Frequency hopping based on BWP switching**

To support improvement of accuracy of SRS-based positioning of RedCap UEs, a method of performing frequency hopping using BWP switching for signals transmitted from the UE to the BS is proposed.

As described above, since RedCap UEs support a smaller bandwidth than normal UEs, frequency hopping may be performed using the BWP switching operation supported in NR to obtain combining gain. To this end, the configuration method for the BWP may be (re)defined, and the specific transmission/reception operation for signaling and reporting between the BS and the UE may be proposed accordingly.

The BWP is a specific frequency band within the carrier bandwidth determined for the UE to transmit and receive data. Four BWPs may be configured for each of downlink and uplink. Each BWP may be subjected to one numerology, and only one BWP may be active at a time. The switching from an active BWP to the next BWP may be performed through DCI, RRC signaling, BWP inactivity timer, or RA of the MAC entity. In switching through RRC/MAC, the active BWP may be switched to a pre-configured BWP or to a newly configured BWP. Switching through DCI may only be performed among pre-configured BWPs. Different switching delays are supported for the switching operations. For switching through the RRC, a relatively long delay is supported in consideration of the RRC processing delay.

Separately from the BWPs configured for data transmission, BWPs for frequency hopping may be configured. The BWP configuration for frequency hopping may be preestablished through RRC or newly established through RRC/MAC during switching. The BWP configuration for frequency hopping may include configuration information related to a switching pattern, which may lead to savings in configuration resources and allocated time resources compared to the BWPs for data transmission.

BWP (switching pattern) configuration for frequency hopping

As described above, up to four BWPs may be supported for uplink, and BWP-Id, which is an IE for identifying each BWP may be set to an identifier value from 1 to 4, excluding 0, which is used for the initial BWP. BWP-Uplink, which is an IE used to support uplink BWP transmission, includes a bwp-Id field, which indicates the value of BWP-Id, a bwp-Common field indicating BWP-UplinkCommon, which is an IE for configuring the common parameters for the BWP, and a bwp-Dedicated indicating BWP-UplinkDedicated IE, which is an IE for configuring UE-specific parameters for the BWP. BWP-UplinkCommon includes BWP, which is an IE for configuring general parameters of the BWP, and other IEs for configuring cell-specific parameters for transmission channels such as PUCCH/PUSCH/RACH. The BWP IE may include fields indicating the location and bandwidth of the BWP in the frequency domain, SCS, and use of extended CP.

Additional parameters may be defined for above-described IE(s) and field(s) to indicate BWP switching for frequency hopping. For example, field(s) for configuring uplink frequency hopping-related parameters may be added to the BWP containing general information of the BWP IE. Parameters including information about whether uplink frequency hopping is used, the number of repetitions of the BWP, the BWP switching period, or the offset in the frequency domain of the next BWP to be repeated may be considered.

FIG. 19 illustrates operations of a UE according to the proposed method. Referring to FIG. 19, the UE may acquire BWP configuration information for frequency hopping delivered by the BS (1905). When the UE is instructed through DCI to switch to a pre-configured BWP for frequency hopping, or instructed by RRC/MAC to switch to a non-pre-configured BWP for frequency hopping, it may perform BWP switching for frequency hopping (1910). The UE performs BWP switching for frequency hopping based on configuration information in the BWP pre-configured or configured during switching. The configuration of the switched BWP may replicate and conform to the configuration information related to the corresponding BWP. Specifically, when use of the frequency hopping is indicated within the BWP IE in the BWP configuration information for frequency hopping, BWP switching may be performed at time intervals corresponding to the BWP switching period parameter as many times as the value indicated by the number of BWP repetition parameter without separate instruction for the BWP switching from the BS. Frequency resources of the switched BWP may be allocated based on the F-domain offset of next BWP parameter. In addition, the parameters in the BWP IE of the switched BWP may use the values of the parameters in the BWP IE of the corresponding BWP. Once BWP switching is performed as many times as the value indicated by the parameter 'number of BWP repetition parameter', the UE may switch back to the active BWP configured before the BWP switching if there is no other instruction. If the BS instructs the UE to switch to a specific BWP for data transmission, the UE may switch to the specific BWP.

FIG. 20 illustrates operations of a BS according to the proposed method. Referring to FIG. 20, the BS may transmit BWP configuration information for frequency hopping, received from the LMF, to the UE (2010). Using the Bandwidth part indicator field in DCI, the BS may instruct the UE to switch to a pre-configured BWP for frequency hopping. Alternatively, it may instruct the UE to switch to a non-pre-configured BWP for frequency hopping by RRC/MAC. Thus, the UE may be expected to perform BWP switching for frequency hopping. The BS receives SRS-p resources allocated to each BWP at the positions of the frequency resources of the BWPs for frequency hopping based on the BWP configuration information (2015). The BS then performs measurements for positioning by combining the received resources, and then reports the measurements to the LMF.

The LMF may deliver BWP configuration information for frequency hopping via the BS. The LMF may receive, from the BS, a report on positioning-related measurement(s) performed using the SRS-p resource(s) transmitted from the UE, and may estimate the location of the UE through calculation based on the measurement(s).

When performing BWP switching based on the proposed operation method, the configuration information related to the previous BWP may be used within the time interval during which frequency hopping occurs with no expectation of a separate instruction for BWP switching from the BS. Therefore, the switching delay between BWPs and overhead related to the configuration information for frequency hopping may be reduced.

[Proposal 3] Frequency hopping method supporting overlapping

To support improvement of accuracy in SRS-based positioning of RedCap UEs, a method that supports overlapping during frequency hopping is proposed.

As described above, RedCap UEs support a smaller bandwidth than normal UEs, and uplink frequency hopping may be performed within a virtual bandwidth range wider than the supported RedCap UE bandwidth in order for the BS to obtain combining gain in receiving reference signals. When uplink frequency hopping is performed, the BS may be expected to perform coherence combination in consideration of phase in combining signal(s) received through respective hops. In this regard, to improve the accuracy of phase estimation through coherence combination, the operation of overlapping the hops in a certain range in the frequency domain may be supported.

Method of indicating overlapping

When performing frequency hopping supporting overlapping, overlapping may be indicated using an RRC configuration. To this end, two methods may be considered: defining a new RRC parameter to indicate overlapping; and indicating a pre-defined overlapping pattern using an RRC parameter for frequency hopping.

(i) Option 1) Defining a new RRC parameter for overlapping

To indicate overlapping by defining a new RRC parameter, a new parameter for indication of overlapping may be defined in performing calculation related to the frequency domain starting position parameter $k_0^{(pi)}$, which is expressed in Equation 3. In the equation, $n_{offset}^{FH}$ denotes the offset in the frequency domain of each hop according to frequency hopping, and $n_{offset}^{RPFS}$ denotes the offset in the frequency domain according to an RB level partial frequency sounding technique, which is not supported in SRS transmission for positioning.

[Equation 3]

$$k_0^{(pi)}=k'_0{}^{(pi)}+n_{offset}^{FH}+n_{offset}^{RPFS}$$

For example, a new RRC parameter $n'^{OL}$ may be defined. When performing operation related to the frequency domain starting position parameter as shown in Equation 4 using the new parameter, the offset value in the frequency domain may be included by an overlapping parameter configured through RRC signaling to provide an instruction for the overlapping operation. In the equat ion, $n_{offset}^{FH,max}$ denotes the maximum supported value of $n_{offset}^{FH}$. In Equation 4, the offset may be applied to all hops except the first hop.

[Equation 4]

$$k_0^{(pi)}=k'_0{}^{(pi)}+n_{offset}^{FH}+n_{offset}^{RPFS}-n_{offset}^{OL}*\text{ceiling}\left(n_{offset}^{FH}/n_{offset}^{FH,max}\right)$$

$$n_{offset}^{OL}=N_{sc}^{RB}*(n'^{OL})\bmod N_b$$

The UE may receive overlapping parameter information included in the RRC configuration information related to SRS-p resource(s) from the BS. When the UE is a RedCap UE, it may calculate the starting position of each hop in the frequency domain using the overlapping-related parameters configured in the received SRS-p resource, and perform frequency hopping based on the calculation to transmit the SRS-p resource to the BS.

The BS may provide the UE with overlapping-related RRC configuration information related to the SRS-p resource(s) indicated by the LMF. When the target UE is a RedCap UE, a frequency hopping overlapping pattern used for SRS-p transmission may be configured and transmitted through the overlapping parameter within the SRS-p resource to be transmitted. As a specific example, the parameter $n'^{OL}$ may be transmitted together with other frequency hopping-related parameters. The BS receives the SRS-p resources transmitted from the UE at the position(s) of the configured/indicated frequency resources at the configured/indicated SRS-p resource transmission time, performs measurements for positioning by combining the received hops, and then reports the measurements to the LMF.

The LMF may deliver overlapping-related RRC configuration information related to the SRS-p resource(s) via the BS. The LMF may receive, from the BS, a report on positioning-related measurement(s) performed based on the SRS-p resources transmitted from the UE, and estimate the location of the UE through calculation based on the measurement(s).

(ii) Option 2) Pre-defined overlapped pattern using a frequency hopping parameter

The method of indicating a pre-defined overlapping pattern using an RRC parameter for frequency hopping may include two detailed options according to the two proposed frequency hopping methods described above.

- Option 2-1) Defining overlapping-related parameters when redefining SRS-p resource-related RRC configuration

When frequency hopping is performed within a virtual bandwidth range, the SRS-p resource-related RRC configuration information may be redefined as described above, and the frequency hopping pattern may be reconstructed according to the UE's capability. In this case, overlapping including an overlapping pattern may be indicated when redefining the frequency hopping pattern. For example, among SRS resource-related RRC configuration parameters, the parameters c-srs, b-srs, and b-hop for configuring the frequency hopping pattern within the parameter FreqHopping may be similarly defined in the SRS-p resource-related RRC configuration. In this case, the table supporting the transmission and frequency hopping bandwidth configuration for SRS resources may be reused for SRS-p resources. In this case, an overlapping pattern may be redefined for cases unsupported depending on the UE's capability, and thus the overlapping indication operation using the aforementioned parameters may be expected.

The UE may obtain configuration information related to the SRS-p resource(s) provided by the BS. When the UE is a RedCap UE, the UE may receive, through the parameters c-srs, b-srs, and b-hop configured within the received SRS-p resource, configuration of the SRS bandwidth, frequency hopping pattern, overlapping pattern, and the like used for SRS-p transmission. Specifically, indexes indicated by the parameters c-srs, b-srs, and b-hop may be referenced according to a certain rule in a separate SRS frequency hopping-related configuration table defined for the RedCap UE. As a specific example, in the case where the hop bandwidth is set greater than the frequency bandwidth supported by the RedCap UE in the SRS frequency hopping configuration supported by the current NR Rel-17 standard, the value of the parameter b-srs may be increased to reduce the hop bandwidth, and the operation of overlapping frequency hopping may be newly configured. Alternatively, when an entire SRS-p resource transmission bandwidth is configured to be less than the maximum frequency bandwidth supported by the RedCap UE, the value of the parameter b-hop may be decreased to increase the entire SRS-p resource transmission bandwidth, and the operation of overlapping frequency hopping may be newly configured. Then, the UE transmits the SRS-p resource by performing frequency hopping including the overlapping method configured/indicated according to the above-described method at the configured/indicated SRS-p resource time/frequency resources.

The BS may provide the UE with the configuration information related to the SRS-p resource(s) indicated by the LMF. When the target UE is a RedCap UE, the BS may configure an the SRS bandwidth, frequency hopping pattern, overlapping pattern, and the like used for SRS-p transmission through the parameters c-srs, b-srs, and b-hop in the SRS-p resource to be transmitted and transmit the same. Specifically, configuration and transmission may be performed by referencing, based on a certain rule, an index indicated by the parameters c-srs, b-srs, and b-hop in a separate SRS frequency hopping-related configuration table defined for the RedCap UE. Thereafter, the BS receives the SRS-p resource transmitted by the UE at the position(s) of the configured/indicated frequency resources at the configured/indicated SRS-p resource transmission time, performs measurements for positioning by combining the received hops, and then reports the measurements to the LMF.

The LMF may deliver the configuration information related to the SRS-p resource(s) via the BS. The LMF receives, from the BS, a report on positioning-related measurement(s) performed using the SRS-p resource transmitted from the UE. Based on the measurement(s), the LMF may estimate the location of the UE through calculation.

- Option 2-2) Defining overlapping-related parameters when redefining BWP-related RRC configuration

When frequency hopping is performed using BWP switching, an IE for configuring uplink frequency hopping-related parameters may be added as described above. By defining an overlapping-related parameter within the IE, overlapping may be indicated. For example, a parameter indicating the offset in the frequency domain of the next BWP to be repeated may be added in the IE. If the parameter is not configured, overlapping will not be performed. When the parameter is configured and is less than 0, overlapping in the frequency domain may be performed to the extend corresponding to the value of the parameter.

The UE may acquire BWP configuration information for frequency hopping delivered by the BS. When the UE is instructed through DCI to switch to a pre-configured BWP for frequency hopping, or instructed by RRC/MAC to switch to a non-pre-configured BWP for frequency hopping, it may be expected to perform BWP switching for frequency hopping. The UE performs BWP switching for frequency hopping based on configuration information in the BWP pre-configured or configured during switching. The configuration of the switched BWP may replicate and conform to the configuration information related to the corresponding BWP. When overlapping-related information is configured in the configuration information, the BWP switching may be performed according to the indicated overlapping configuration. After all BWP switching is performed, the UE may switch back to the active BWP configured before the BWP switching if there is no other instruction. If the BS instructs the UE to switch to a specific BWP for data transmission, the UE may switch to the specific BWP.

The BS may transmit BWP configuration information for frequency hopping, as indicated by the LMF, to the UE. When the overlapping operation is necessary due to the UE/BS state or characteristics, an overlapping-related configuration parameter may be added and transmitted in the BWP configuration information for frequency hopping. The BS receives SRS-p resources allocated to each BWP at the positions of the frequency resources of the BWPs for frequency hopping based on the BWP configuration information. The BS then performs measurements for positioning by combining the received resources, and then reports the measurements to the LMF.

The LMF may deliver BWP configuration information for frequency hopping via the BS. The LMF may receive, from the BS, a report on positioning-related measurement(s) performed using the SRS-p resource(s) transmitted from the UE, and may estimate the location of the UE through calculation based on the measurement(s).

When the overlapping operation is supported, a resource block (RB), a resource element (RE), or other frequency units, which may be configured according to the proposed methods, may be considered as the unit of the overlapped interval in the frequency domain may be.

In the case where frequency hopping that supports the overlapping operation is performed, coherence combination of signal(s) received by the BS through time/frequency resources of each hop according to the phase may improve the accuracy of phase compensation through the partially overlapped frequency interval. Further, frequency resources may be efficiently utilized through flexible configuration/indication of the overlapping patterns.

## Frequency hopping (and/or BWP switching) for ISAC

As mentioned earlier, the sensing mode of ISAC may be categorized into six modes depending on the transmission entity (gNB/UE) that transmits sensing signals and the sensing entity (transmitter/another gNB/another UE) that senses the signals, as shown in the figure. The bi-static mode has longer coverage than the mono-static mode and does not need the high requirement of full-duplex.

From the sensing entity's perspective, the sensing mode in which the gNB acts as a receiver is attracting attention because it has high computation performance and does not require quantization, which is advantageous in terms of sensing accuracy performance, while allowing for use of existing supported inter-node cooperation systems.

However, the bi-static sensing mode has lower sensing accuracy due to long latency and timing errors. Some services for which sensing technology is used may require high sensing accuracy. Therefore, there may be a need for a method to improve sensing accuracy, particularly a method considering the bi-static mode.

Considering these features and issues, support for frequency hopping may be necessary to improve sensing accuracy by allowing signals to be transmitted/received in a broader band than the maximum frequency band supported by the UE or a specific band configured for other purposes (e.g., data communication).

Hereafter, a method of performing frequency hopping within a virtual frequency band and related signaling and reporting methods are proposed to improve sensing accuracy in sensing objects using wireless signals.

To this end, sensing signals are used. Signals used for data communication may be reused for the sensing purpose. Alternatively, a separate signal designed exclusively for sensing may be used. In this case, the BW required for data communication may be different from the BW required for sensing. For example, considering the data rate and/or BW capability required by a specific UE, a wider bandwidth may be configured for sensing in the case where the UE has a small BW configured for communication, but high sensing accuracy is required. Considering these characteristics, when a specific UE is allocated a virtual frequency band for sensing that exceeds the bandwidth allocated for data communication, the UE transmits the sensing signal in the virtual frequency band by performing frequency hopping.

The present disclosure describes the proposed methods as being applied to data signals and sensing signals supported by the 3GPP 5G NR system. However, the proposed methods are not limited thereto and may be generally applied to other signals transmitted and received for data communication and sensing between the BS and the UE in 6G systems other than the 5G NR systems. Therefore, the methods proposed in the present disclosure may be applied to all kinds of transmission/reception methods and signals.

**[Proposal 41 Transmission of sensing signals through frequency hopping within a virtual bandwidth for sensing**

To support improvement of sensing accuracy in ISAC scenarios, a method of performing frequency hopping within a virtual bandwidth range for transmission/reception of sensing signals between the UE and the BS is proposed.

To this end, in addition to the frequency band configuration unit for data communication (hereinafter data-BWP) configured for the UE by the BS, an additional frequency band configuration unit for sensing (hereinafter Sens-BWP) may be configured. Candidate Sens-BWP(s) may be pre-configured using a semi-statically configured higher-layer signal (hereinafter, RRC signal), and sensing signals may be configured/indicated to be transmitted/received by switching between the frequency band configuration units (hereinafter, sub-Sens-BWP(s)) assigned to the configured Sens-BWP(s).

As a specific example, when providing Sens-BWP configuration to the UE through RRC signaling, the BS may configure a hopping pattern including the bandwidth, number, frequency position, relative frequency hop index, etc. of the respective sub-Sens-BWPs by combining related parameters defined in the RRC configuration IE of the Sens-BWP.

FIG. 21 is a diagram illustrating a sensing signal transmitted based on frequency hopping according to Proposal 4.

Referring to FIG. 21, the UE transmits a data signal within a data-BWP 2101 configured for data communication. When the UE receives configuration/instruction for switching to a Sens-BWP pre-configured for the sensing purpose from the BS (or SMF), it may transmit a sensing signal by hopping among sub-sens-BWPs 2103 within the sens-BWP. The time gaps required for (i) switching between data-BWP1 and data-BWP1, (ii) switching between sub-Sens-BWP 2102 and data-BWP, and/or (iii) switching 2106 between sub-Sens-BWPs 2103 may differ from each other. For example, the time gap for (i) may be larger than the time gaps for (ii) and (iii).

FIG. 22 illustrates operations of a UE according to Proposal 4.

Referring to FIG. 22, the UE may acquire Sens-BWP related RRC configuration information provided by the BS through RRC signaling (2205). The UE may receive a configuration/instruction for switching to a Sens-BWP from the BS or SMF (2210). The UE may determine the hopping pattern based on the configuration information (2215), and transmit/receive a sensing signal within the corresponding frequency band (2220). The UE may perform transmission/reception while hopping in the frequency band according to the information about sub-Sens-BWPs configured in the Sens-BWP. Using the combination of related parameters defined in the RRC configuration IE of the Sens-BWP, the hopping pattern within the frequency band may be determined and the sensing signal(s) may be transmitted/received according to the pattern.

FIG. 23 illustrates operations of a BS according to Proposal 4.

Referring to FIG. 23, the BS may provide RRC configuration information to the UE. When sensing accuracy needs to be improved, the BS may configure related parameters for the Sens-BWP in the RRC configuration information provided to the UE. The BS may transmit an instruction for switching to the Sens-BWP (2310), and transmit/receive sensing signal(s) at the position(s) of the corresponding frequency resource(s) based on the frequency hopping pattern.

The Sens-BWP, which is a frequency band configuration unit for sensing, may be defined as a frequency band configured for the UE to transmit a sensing signal and/or a frequency band configured for the UE to receive/measure a sensing signal. The frequency bandwidth of the Sens-BWP may exceed the maximum frequency bandwidth supported for data transmission of the UE. The bandwidth may include one or more sub-sens-BWP(s) as long as the bandwidth does not exceed the maximum supported frequency bandwidth.

Although the description above is based on the concept and terminology of RRC signaling/configuration used in 5G NR, embodiments are not limited thereto and may generally be used for higher-layer signals of general wireless communication systems transmitted by the BS/upper node to the UE to configure/control radio resources, as in the structure of RRC.

**[Proposal 51 Transmitting a sensing signal through switching to a frequency band for sensing**

To support improvement of sensing accuracy in ISAC scenarios, a method of performing switching of a frequency band for transmission/reception of sensing signals between the UE and the BS is proposed.

To this end, in addition to the frequency band configuration unit for data communication (hereinafter data-BWP) configured for the UE by the BS, an additional frequency band configuration unit for sensing (hereinafter Sens-BWP) may be configured. Candidate Sens-BWP(s) may be pre-configured using a semi-statically configured higher-layer signal (hereinafter, RRC signal), and sensing signals may be configured/indicated to be transmitted by switching between the configured Sens-BWP(s). As a specific example, at least one data-BWP for data communication in the frequency band may be configured to transmit a data signal and a sensing signal simultaneously using the FDM/TDM. The BS may instruct the UE receiving the configuration/indication of the data-BWP to switch to Sens-BWP(s) pre-configured through RRC signaling, using RRC/DCI/timer. During the switching between Sens-BWPs, the same numerology may be maintained. Thus, the time gap required for the switching may be configured to be smaller than the time gap required for switching between data-BWPs.

FIG. 24 is a diagram illustrating a sensing signal transmitted based on Sens-BWP switching according to Proposal 5.

Referring to FIG. 24, within a data-BWP 2401, the UE may transmit/receive a data signal 2403 and a sensing signal 2404 simultaneously. A sens-BWP 2402 may be configured for the sensing purpose. When the UE receives an instruction for switching to the sens-BWP 2402 from the BS (or SMF), it may transmit the sensing signal while performing frequency hopping in a frequency band.

FIG. 25 illustrates operations of a UE according to Proposal 5.

Referring to FIG. 25, the UE may acquire Sens-BWP related RRC configuration information provided by the BS through RRC signaling (2505). When the UE receives a configuration/instruction for switching to a Sens-BWP from the BS or SMF (2510, Y), it may perform RF retuning to the corresponding frequency band, and then transmit/receive a sensing signal within the band (2515).

FIG. 26 illustrates operations of a BS according to Proposal 5.

Referring to FIG. 26, the BS may provide Sens-BWP(s)-related RRC configuration information to the UE (2605). When sensing accuracy needs to be improved, the BS may configure/indicate switching to Sens-BWP(s) for the UE through RRC/DCI (2610, Y). The BS may transmit/receive sensing signal(s) at the position(s) of corresponding frequency resources based on the configured/indicated Sens-BWP(s) (2615).

The Sens-BWP, a frequency band configuration unit for sensing, may be defined as a frequency band configured for the UE to transmit sensing signals and/or a frequency band configured for the UE to receive/measure sensing signals.

Although the description above is based on the concept and terminology of RRC signaling/configuration used in 5G NR, embodiments are not limited thereto and may generally be used for higher-layer signals of general wireless communication systems transmitted by the BS/upper node to the UE to configure/control radio resources, as in the structure of RRC.

Also, although the description above is based on the concept and terminology of BWP switching through RRC/DCI used in 5G NR, embodiments are not limited thereto and may generally be used for signals of general wireless communication systems transmitted by the BS/upper node through downlink to configure/indicate switching between frequency bands in which the UE performs transmission/reception, as in the structure of BWP switching through RRC/DCI.

FIG. 27 illustrates a flow of a signal transmission method for a UE according to an embodiment.

Referring to FIG. 27, the UE may receive configuration information related to signal transmission through higher layer signaling (2705).

The UE may determine at least one transmission BWP based on the configuration information (2710).

The UE may transmit a first signal in a first transmission BWP among the determined at least one transmission BWP (2710).

Based on the first transmission BWP exceeding a maximum transmission bandwidth size for the UE, the UE performs the transmission of the first signal at least twice through frequency hopping within the first transmission BWP.

The first signal may be a wireless sensing signal for object sensing. The first transmission BWP may be one virtual BWP configured based on a plurality of physical BWPs each having a size less than or equal to the maximum transmission bandwidth size for the UE.

The first transmission BWP may be greater than a second transmission BWP for transmission of a second signal containing uplink data. The UE may perform BWP switching from the second transmission BWP to the first transmission BWP to transmit the first signal.

The first transmission BWP may include a plurality of sub-BWPs. At least one of the plurality of sub-BWPs partially overlaps with at least one other sub-BWP in a frequency domain.

The frequency hopping within the first transmission BWP may be performed based on switching among the plurality of sub-BWPs.

The first signal may include a sounding reference signal (SRS) for positioning.

The first signal may be a signal related to Integrated Sensing and Communication (ISAC).

FIG. 28 illustrates a flow of a signal reception method for a BS according to an embodiment.

Referring to FIG. 28, the BS may determine at least one transmission BWP for a UE (2805).

The UE may transmit configuration information related to signal transmission of the UE through higher layer signaling based on the determination of the at least one transmission BWP (2810).

The UE may receive the first signal from the UE in the first transmit BWP among the determined transmit BWPs (2810).

Based on the first transmission BWP exceeding a maximum transmission bandwidth size for the UE, the BS may perform the reception of the first signal at least twice through frequency hopping within the first transmission BWP.

The first signal may be a wireless sensing signal for object sensing. The first transmission BWP may be one virtual BWP configured based on a plurality of physical BWPs each having a size less than or equal to the maximum transmission bandwidth size for the UE.

The first transmission BWP may be greater than a second transmission BWP for transmission of a second signal containing uplink data. The BS may instruct the UE to perform BWP switching from the second transmission BWP to the first transmission BWP to transmit the first signal.

The first transmission BWP may include a plurality of sub-BWPs. At least one of the plurality of sub-BWPs partially overlaps with at least one other sub-BWP in a frequency domain.

The frequency hopping within the first transmission BWP may be related to switching among the plurality of sub-BWPs.

The first signal may include a sounding reference signal (SRS) for positioning.

The first signal may be a signal related to Integrated Sensing and Communication (ISAC).

FIG. 29 illustrates a communication system 1 applied to the present disclosure.

Referring to FIG. 29, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

FIG. 30 illustrates wireless devices applicable to the present disclosure.

Referring to FIG. 30, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 29.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In an embodiment of the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In an embodiment of the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

FIG. 31 illustrates another example of a wireless device applied to the present disclosure. The wireless device may be implemented in various forms according to a use-case/service (refer to FIG. 29).

Referring to FIG. 31, wireless devices 100 and 200 may correspond to the wireless devices 100 and 200 of FIG. 30 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 30. For example, the transceiver(s) 114 may include the one or more transceivers 106 and 206 and/or the one or more antennas 108 and 208 of FIG. 30. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 29), the vehicles (100b-1 and 100b-2 of FIG. 29), the XR device (100c of FIG. 29), the hand-held device (100d of FIG. 29), the home appliance (100e of FIG. 29), the IoT device (100f of FIG. 29), a digital broadcast terminal, a hologram device, a public safety device, an MTC device, a medicine device, a fintech device (or a finance device), a security device, a climate/environment device, the AI server/device (400 of FIG. 29), the BSs (200 of FIG. 29), a network node, etc. The wireless device may be used in a mobile or fixed place according to a use-example/service.

In FIG. 31, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

FIG. 32 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 32, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 31, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

The above-described embodiments correspond to combinations of elements and features of the present disclosure in prescribed forms. And, the respective elements or features may be considered as selective unless they are explicitly mentioned. Each of the elements or features can be implemented in a form failing to be combined with other elements or features. Moreover, it is able to implement an embodiment of the present disclosure by combining elements and/or features together in part. A sequence of operations explained for each embodiment of the present disclosure can be modified. Some configurations or features of one embodiment can be included in another embodiment or can be substituted for corresponding configurations or features of another embodiment. And, an embodiment may be configured by combining claims failing to have relation of explicit citation in the appended claims together or can be included as new claims by amendment after filing an application.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

## INDUSTRIAL APPLICABILITY

The present disclosure is applicable to UEs, BSs, or other apparatuses in a wireless mobile communication system.

## Claims

1. A method of transmitting a signal by a terminal in a wireless communication system, the method comprising:

    receiving configuration information related to signal transmission of the terminal through higher layer signaling;
    determining at least one transmission bandwidth part (BWP) based on the configuration information; and
    transmitting a first signal in a first transmission BWP among the determined at least one transmission BWP,
    wherein, based on the first transmission BWP exceeding a maximum transmission bandwidth size for the terminal, the terminal performs the transmission of the first signal at least twice through frequency hopping within the first transmission BWP.

2. The method of claim 1, wherein the first signal is a wireless sensing signal for object sensing, and
wherein the first transmission BWP is one virtual BWP configured based on a plurality of physical BWPs each having a size less than or equal to the maximum transmission bandwidth size for the terminal.

3. The method of claim 1, wherein the first transmission BWP is greater than a second transmission BWP for transmission of a second signal containing uplink data.

4. The method of claim 3, wherein the terminal performs BWP switching from the second transmission BWP to the first transmission BWP to transmit the first signal.

5. The method of claim 1, wherein the first transmission BWP comprises a plurality of sub-BWPs, and
wherein at least one of the plurality of sub-BWPs partially overlaps with at least one other sub-BWP in a frequency domain.

6. The method of claim 1, wherein the frequency hopping within the first transmission BWP is performed based on switching among the plurality of sub-BWPs.

7. The method of claim 1, wherein the first signal comprises a sounding reference signal (SRS) for positioning.

8. The method of claim 1, wherein the first signal is a signal related to Integrated Sensing and Communication (ISAC).

9. A processor-readable recording medium having recorded thereon a program for executing the method of claim 1.

10. A device for wireless communication, the device comprising:

    a memory configured to store instructions; and
    a processor configured to perform operations by executing the instructions,
    wherein the operations of the processor comprise:

        receiving configuration information related to signal transmission of the device through higher layer signaling;
        determining at least one transmission bandwidth part (BWP) based on the configuration information; and
        transmitting a first signal in a first transmission BWP among the determined at least one transmission BWP,

wherein, based on the first transmission BWP exceeding a maximum transmission bandwidth size for the terminal, the device performs the transmission of the first signal at least twice through frequency hopping within the first transmission BWP.

**11.** The device of claim 10, further comprising a transceiver,
wherein the device is a terminal operating in a wireless communication system.

**12.** The device of claim 10, wherein the device is a processing device configured to control a terminal operating in a wireless communication system.

**13.** A method of receiving a signal by at least one base station in a wireless communication system, the method comprising:

determining at least one transmission bandwidth part (BWP) for a terminal;
transmitting configuration information related to signal transmission of the terminal through higher layer signaling based on the determination of the at least one transmission BWP; and
receiving a first signal in a first transmission BWP among the determined at least one transmission BWP,
wherein, based on the first transmission BWP exceeding a maximum transmission bandwidth size for the terminal, the base station performs the reception of the first signal at least twice through frequency hopping within the first transmission BWP.

**14.** A processor-readable recording medium having recorded thereon a program for executing the method of claim 13.

**15.** A base station for wireless communication, the base station comprising:

at least one memory configured to store instructions; and
at least one processor configured to perform operations by executing the instructions,
wherein the operations of the at least one processor comprise:

determining at least one transmission bandwidth part (BWP) for a terminal;
transmitting configuration information related to signal transmission of the terminal through higher layer signaling based on the determination of the at least one transmission BWP; and
receiving a first signal in a first transmission BWP among the determined at least one transmission BWP,
wherein, based on the first transmission BWP exceeding a maximum transmission bandwidth size for the terminal, the base station performs the reception of the first signal at least twice through frequency hopping within the first transmission BWP.

FIG. 1

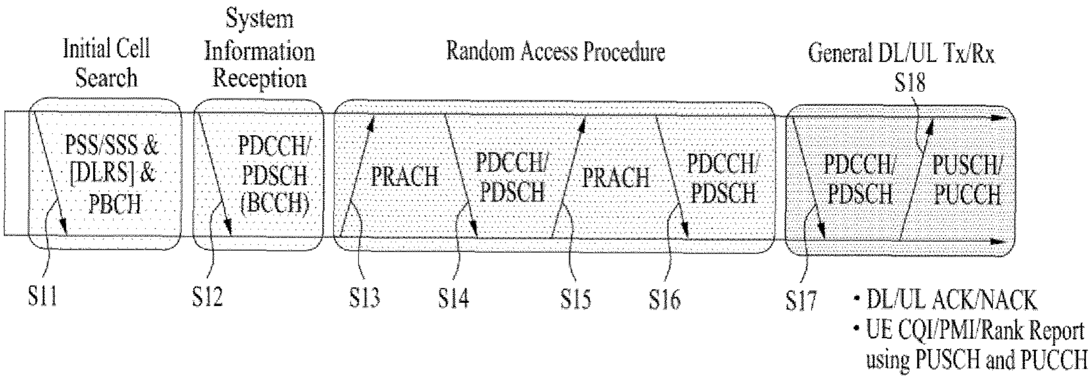
Initial Cell Search
System Information Reception
Random Access Procedure
General DL/UL Tx/Rx
S18
PSS/SSS & [DLRS] & PBCH
PDCCH/ PDSCH (BCCH)
PRACH
PDCCH/ PDSCH
PRACH
PDCCH/ PDSCH
PDCCH/ PDSCH
PUSCH/ PUCCH
S11
S12
S13
S14
S15
S16
S17
• DL/UL ACK/NACK
• UE CQI/PMI/Rank Report using PUSCH and PUCCH

FIG. 2

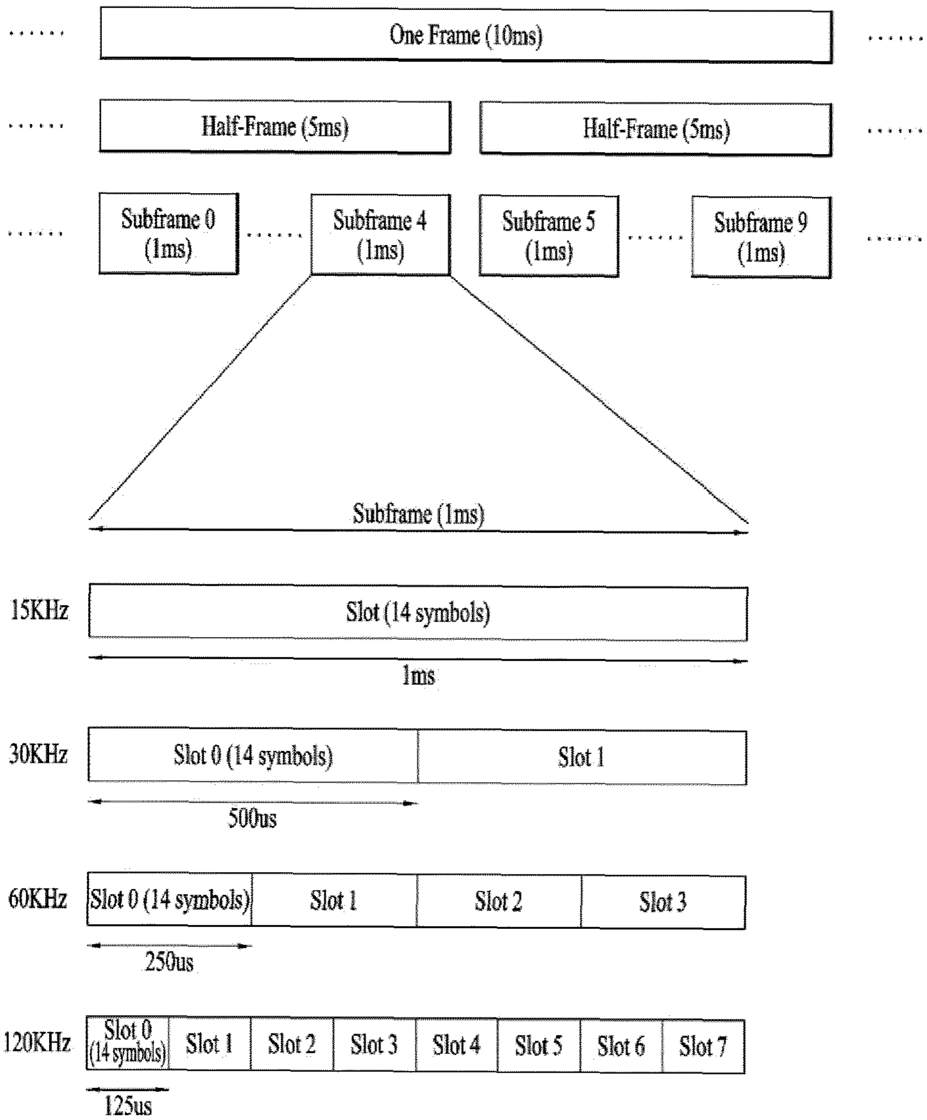
One Frame (10ms)
Half-Frame (5ms)
Half-Frame (5ms)
Subframe 0 (1ms)
Subframe 4 (1ms)
Subframe 5 (1ms)
Subframe 9 (1ms)
Subframe (1ms)
15KHz
Slot (14 symbols)
1ms
30KHz
Slot 0 (14 symbols)
Slot 1
500us
60KHz
Slot 0 (14 symbols)
Slot 1
Slot 2
Slot 3
250us
120KHz
Slot 0 (14 symbols)
Slot 1
Slot 2
Slot 3
Slot 4
Slot 5
Slot 6
Slot 7
125us

FIG. 3

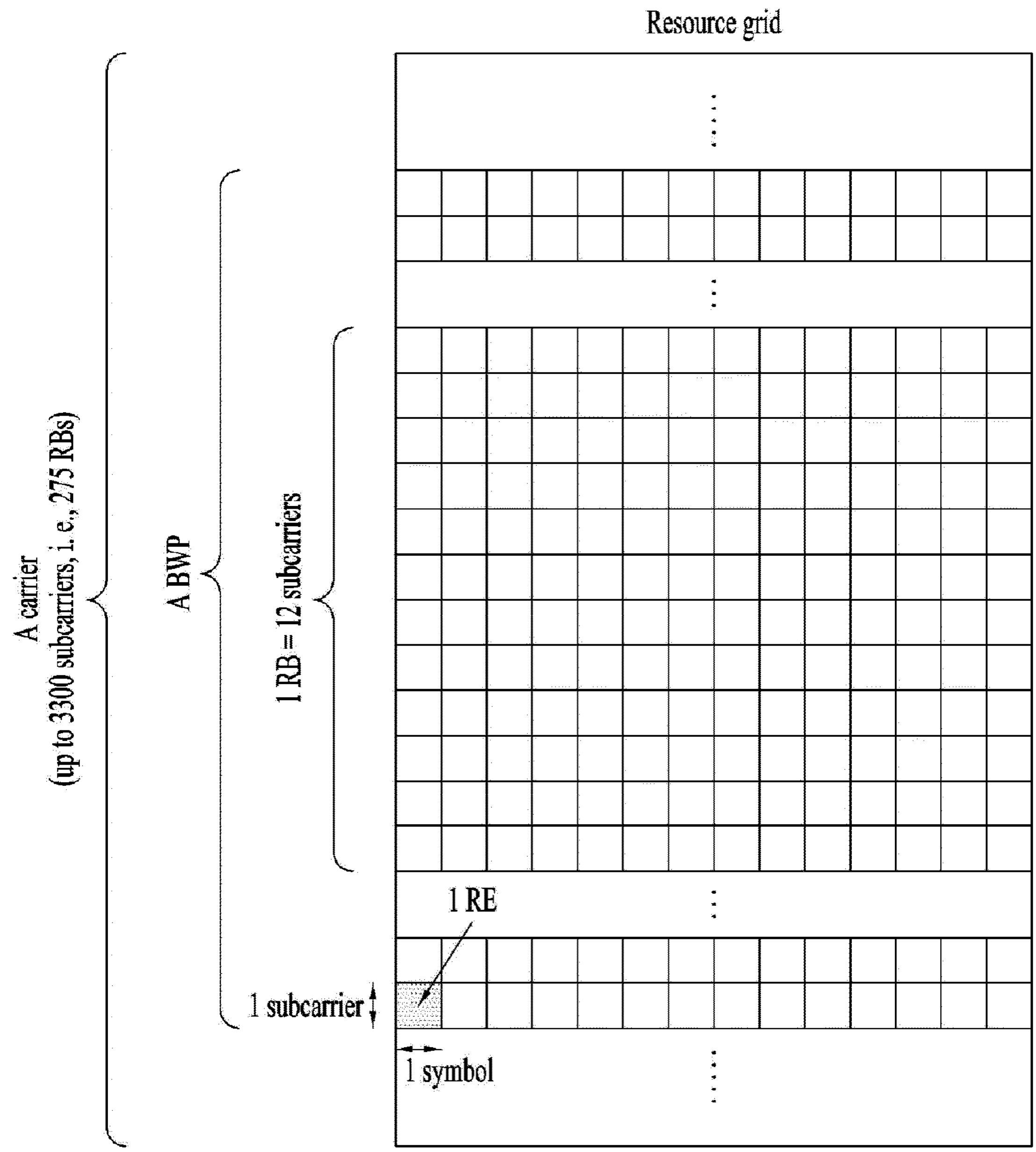
Resource grid
A carrier
(up to 3300 subcarriers, i. e., 275 RBs)
A BWP
1 RB = 12 subcarriers
1 RE
1 subcarrier
1 symbol

FIG. 4

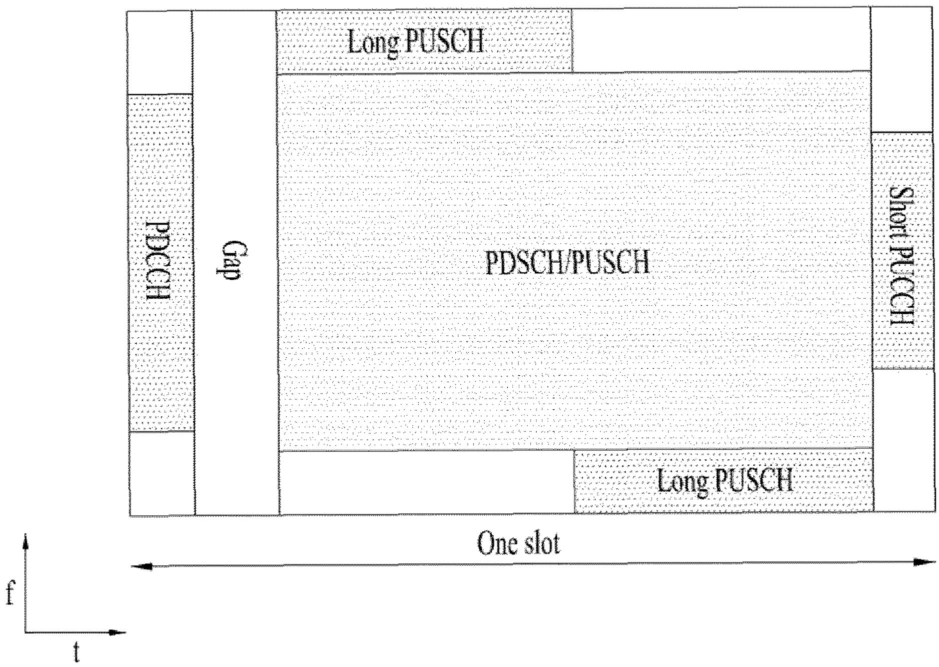
Long PUSCH
PDCCH
Gap
PDSCH/PUSCH
Short PUCCH
Long PUSCH
One slot
f
t

FIG. 5

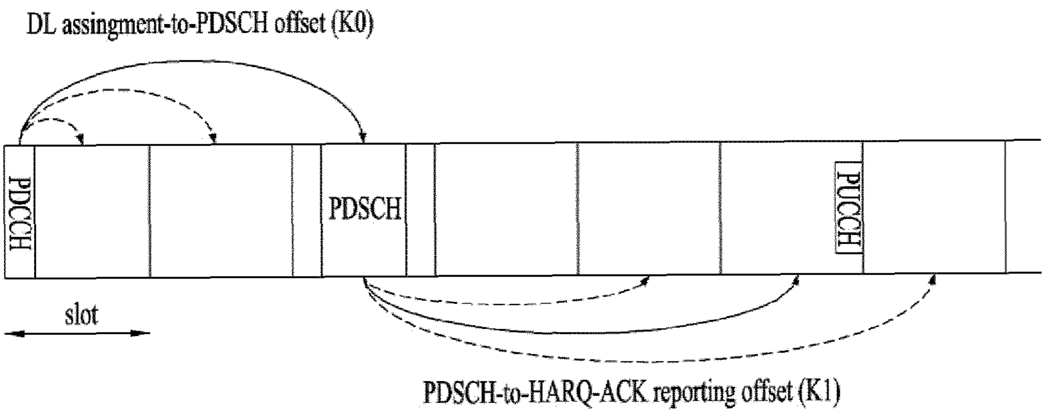
DL assingment-to-PDSCH offset (K0)
PDCCH
PDSCH
PUCCH
slot
PDSCH-to-HARQ-ACK reporting offset (K1)

# FIG. 6

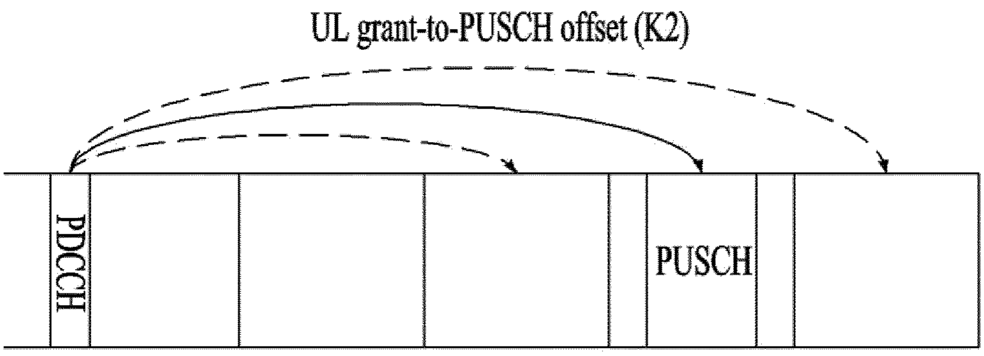
UL grant-to-PUSCH offset (K2)
PDCCH
PUSCH

# FIG. 7

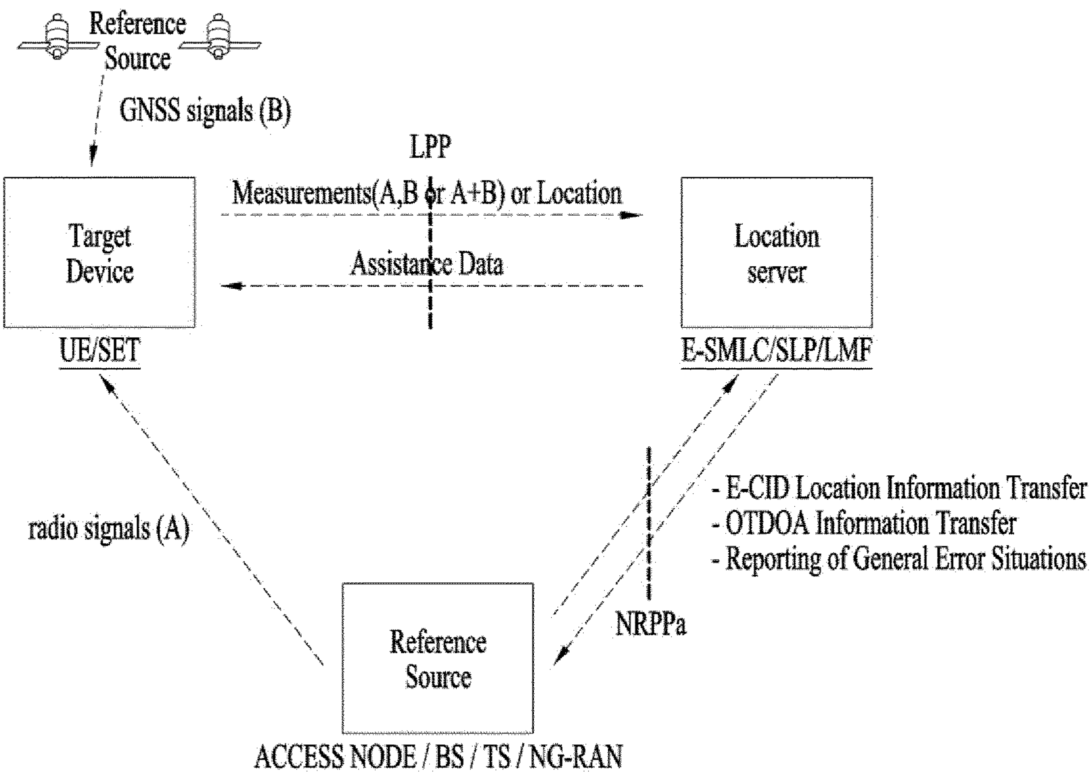
Reference Source
GNSS signals (B)
LPP
Measurements(A,B or A+B) or Location
Assistance Data
Target Device
UE/SET
Location server
E-SMLC/SLP/LMF
- E-CID Location Information Transfer
- OTDOA Information Transfer
- Reporting of General Error Situations
radio signals (A)
NRPPa
Reference Source
ACCESS NODE / BS / TS / NG-RAN

**FIG. 8**

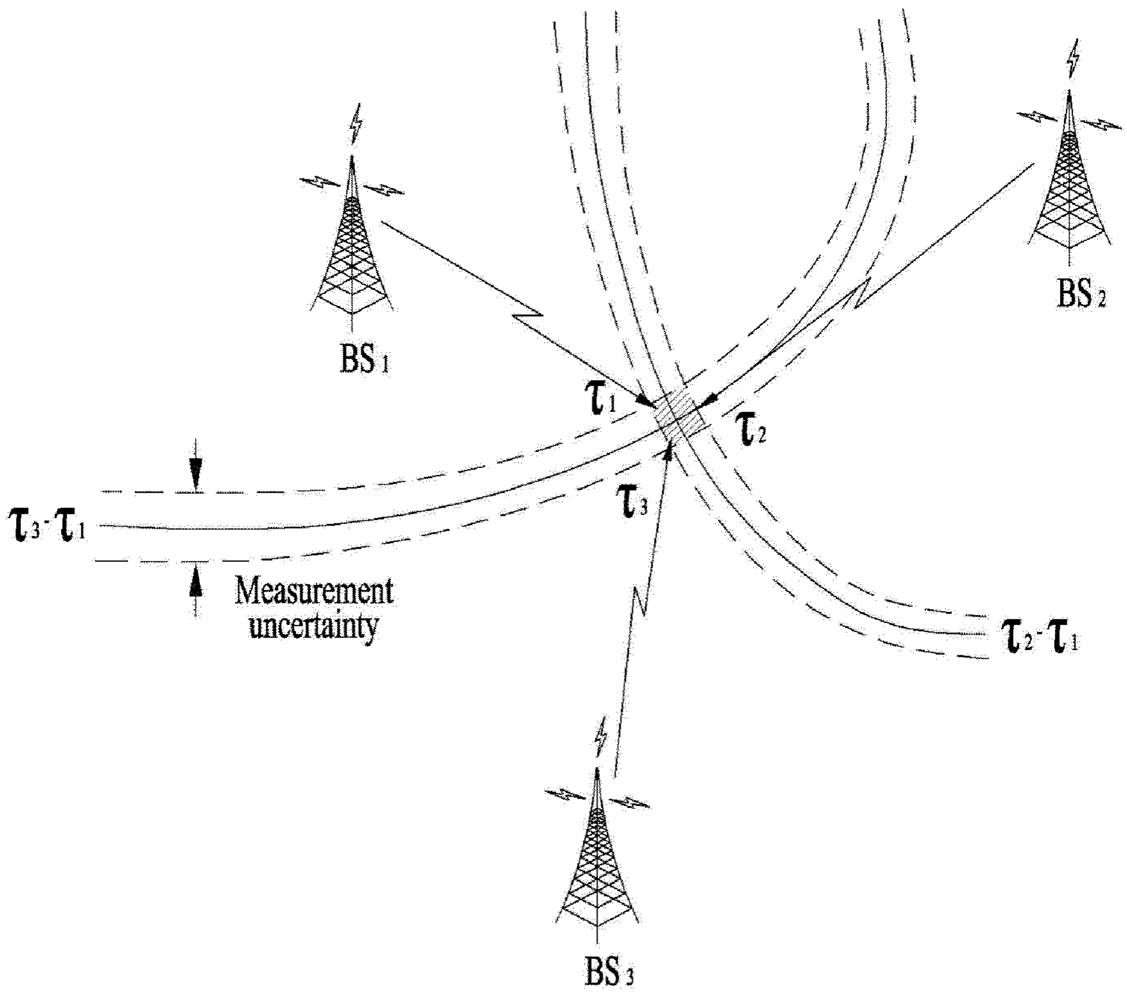

# FIG. 9

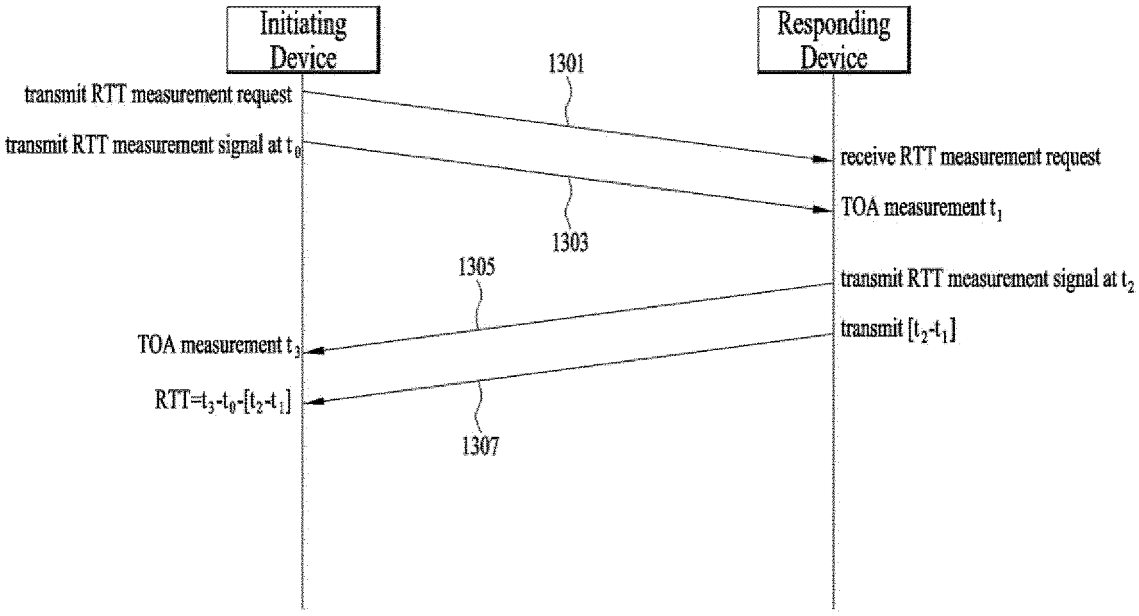
Initiating Device
Responding Device
1301
transmit RTT measurement request
receive RTT measurement request
transmit RTT measurement signal at $t_0$
TOA measurement $t_1$
1303
1305
transmit RTT measurement signal at $t_2$
transmit $[t_2-t_1]$
TOA measurement $t_3$
RTT=$t_3-t_0-[t_2-t_1]$
1307

(a)

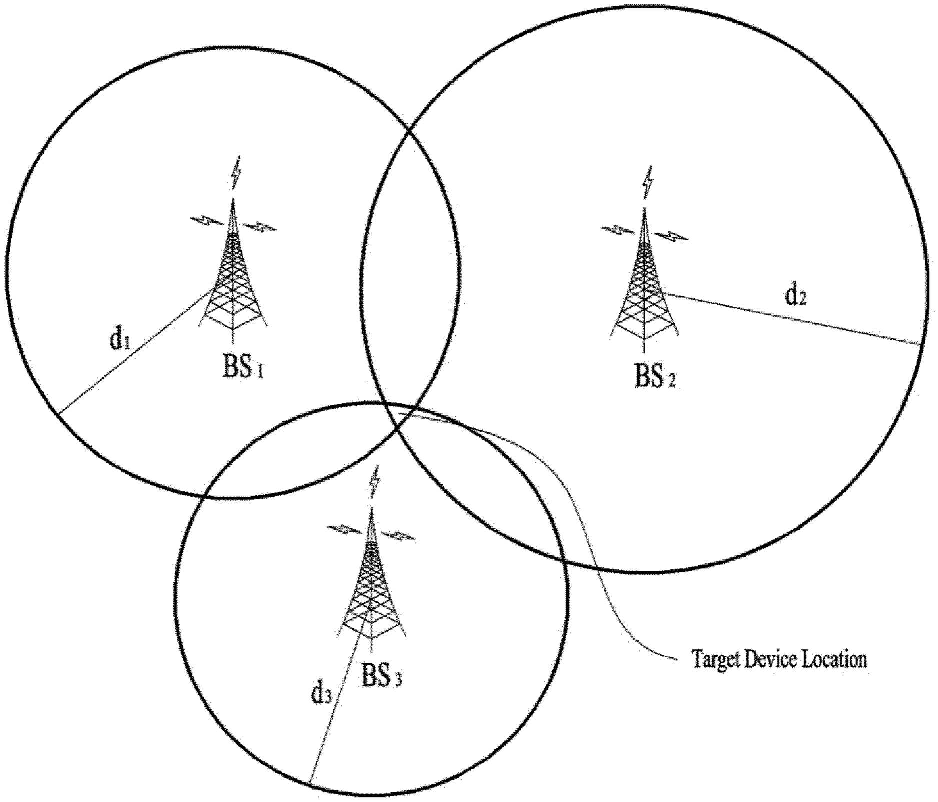
$d_1$
$BS_1$
$d_2$
$BS_2$
$d_3$
$BS_3$
Target Device Location

(b)

FIG. 10

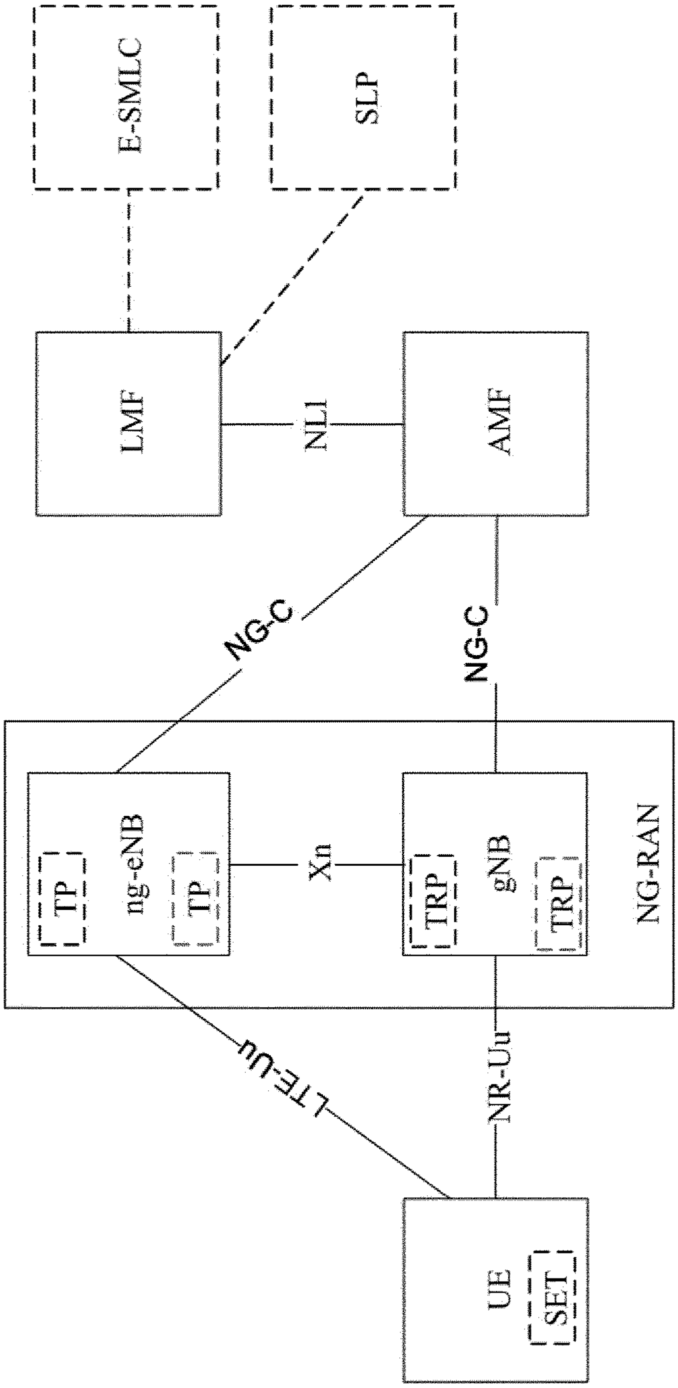
E-SMLC
SLP
LMF
NL1
AMF
NG-C
NG-C
ng-eNB
TP
TP
Xn
gNB
TRP
TRP
NG-RAN
LTE-Uu
NR-Uu
UE
SET

FIG. 11

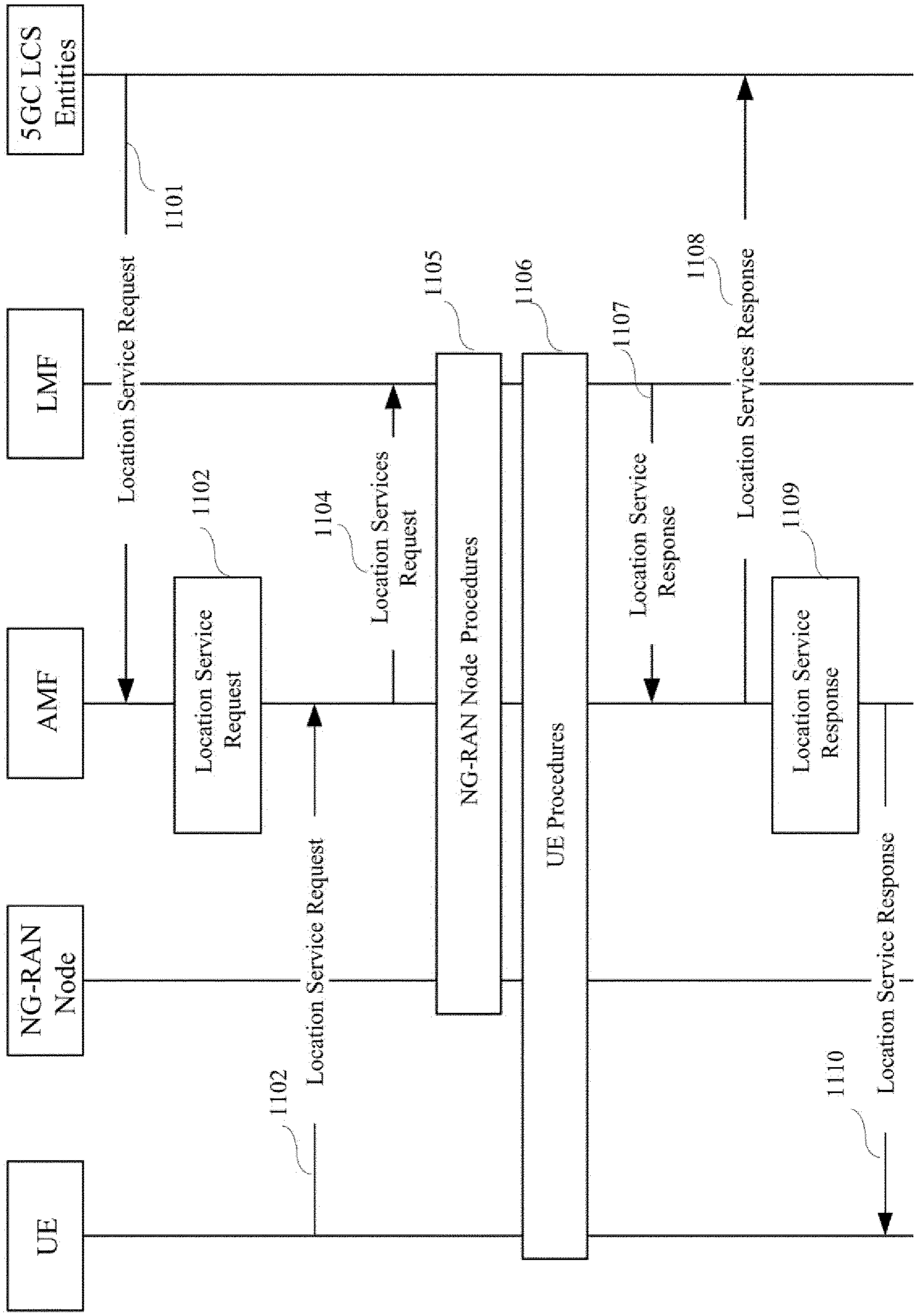
5GC LCS Entities
LMF
AMF
NG-RAN Node
UE
1101
Location Service Request
1102
Location Service Request
1102
Location Service Request
1104
Location Services Request
1105
NG-RAN Node Procedures
1106
UE Procedures
1107
Location Service Response
1108
Location Services Response
1109
Location Service Response
1110
Location Service Response

FIG. 12

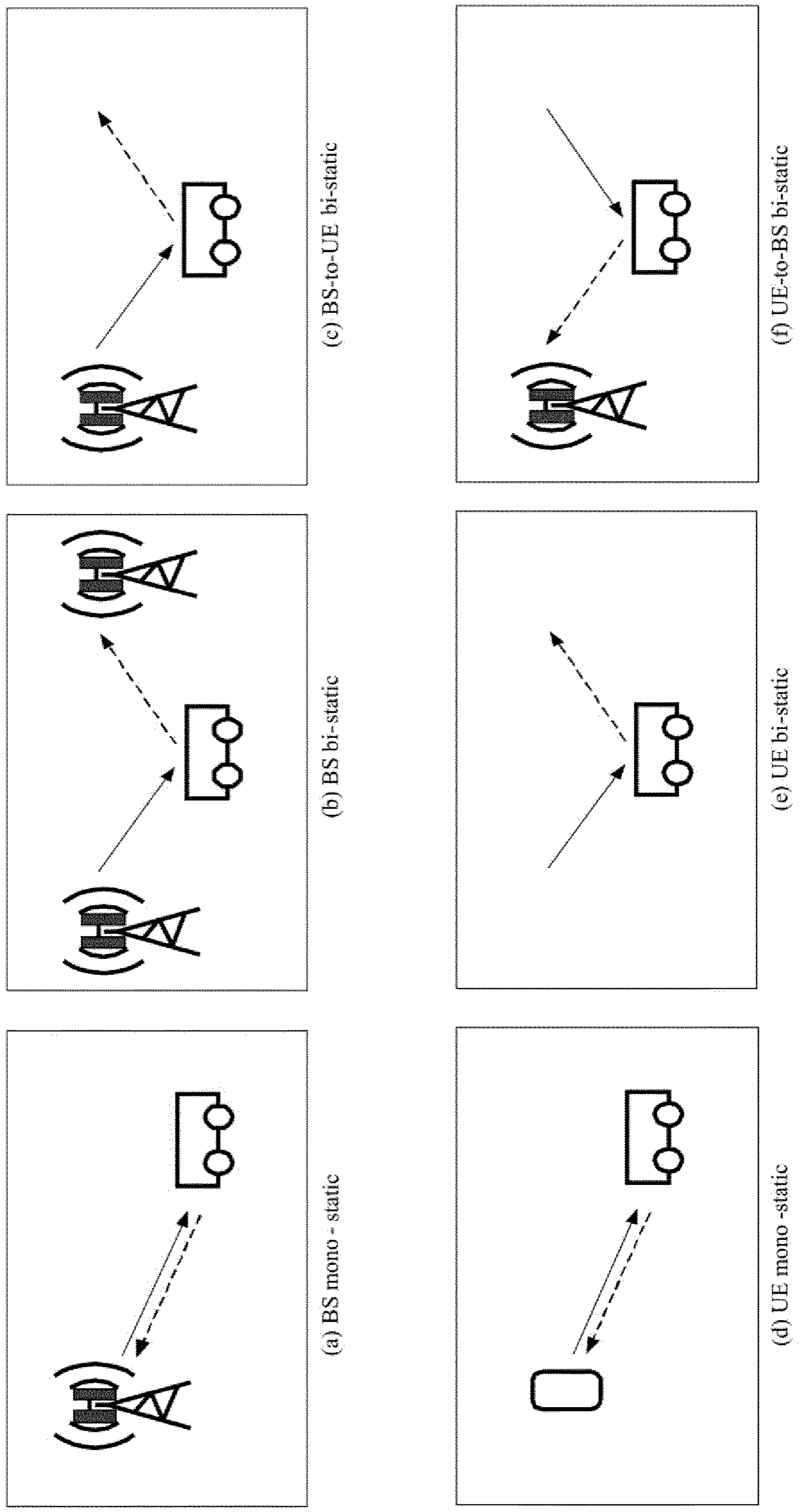
(a) BS mono - static
(b) BS bi-static
(c) BS-to-UE bi-static
(d) UE mono -static
(e) UE bi-static
(f) UE-to-BS bi-static

FIG. 13

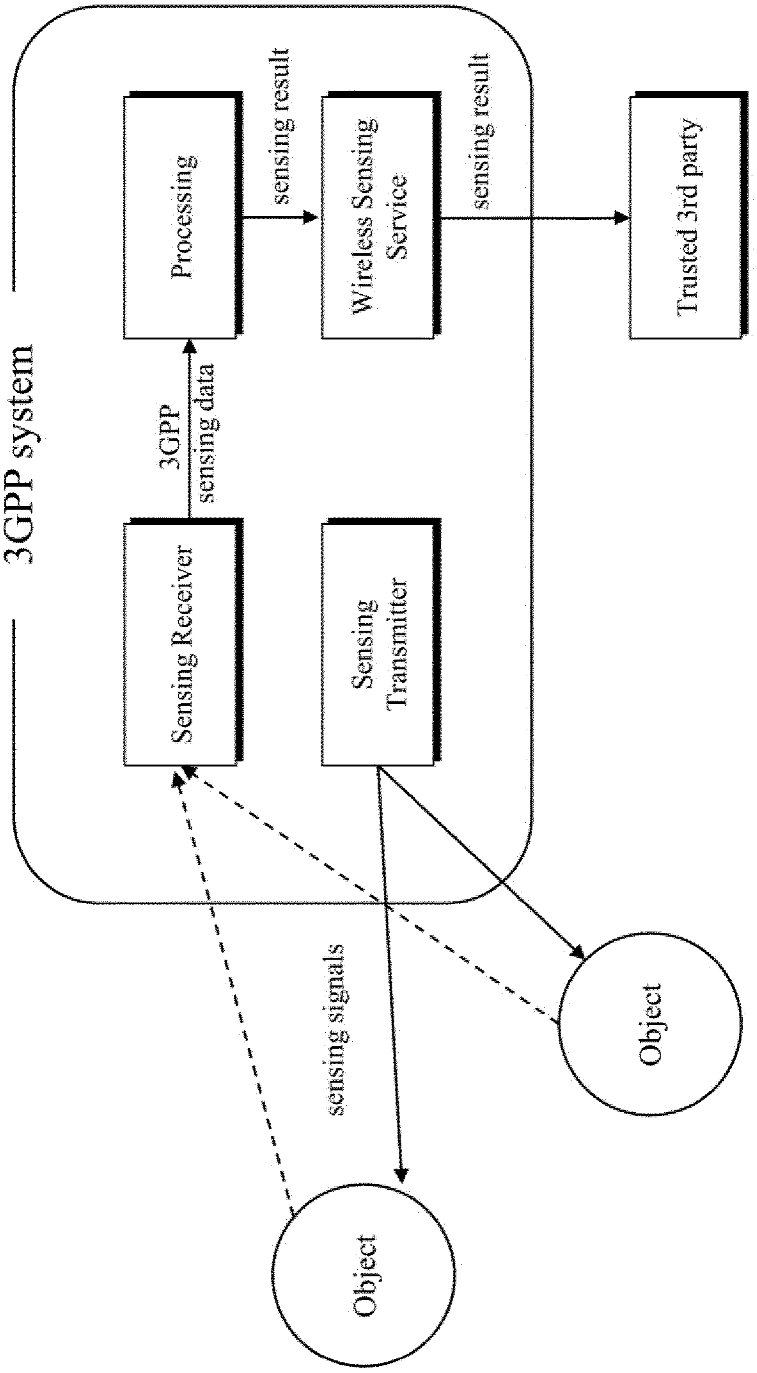
3GPP system
Processing
sensing result
Wireless Sensing Service
sensing result
Trusted 3rd party
3GPP sensing data
Sensing Receiver
Sensing Transmitter
sensing signals
Object
Object

FIG. 14

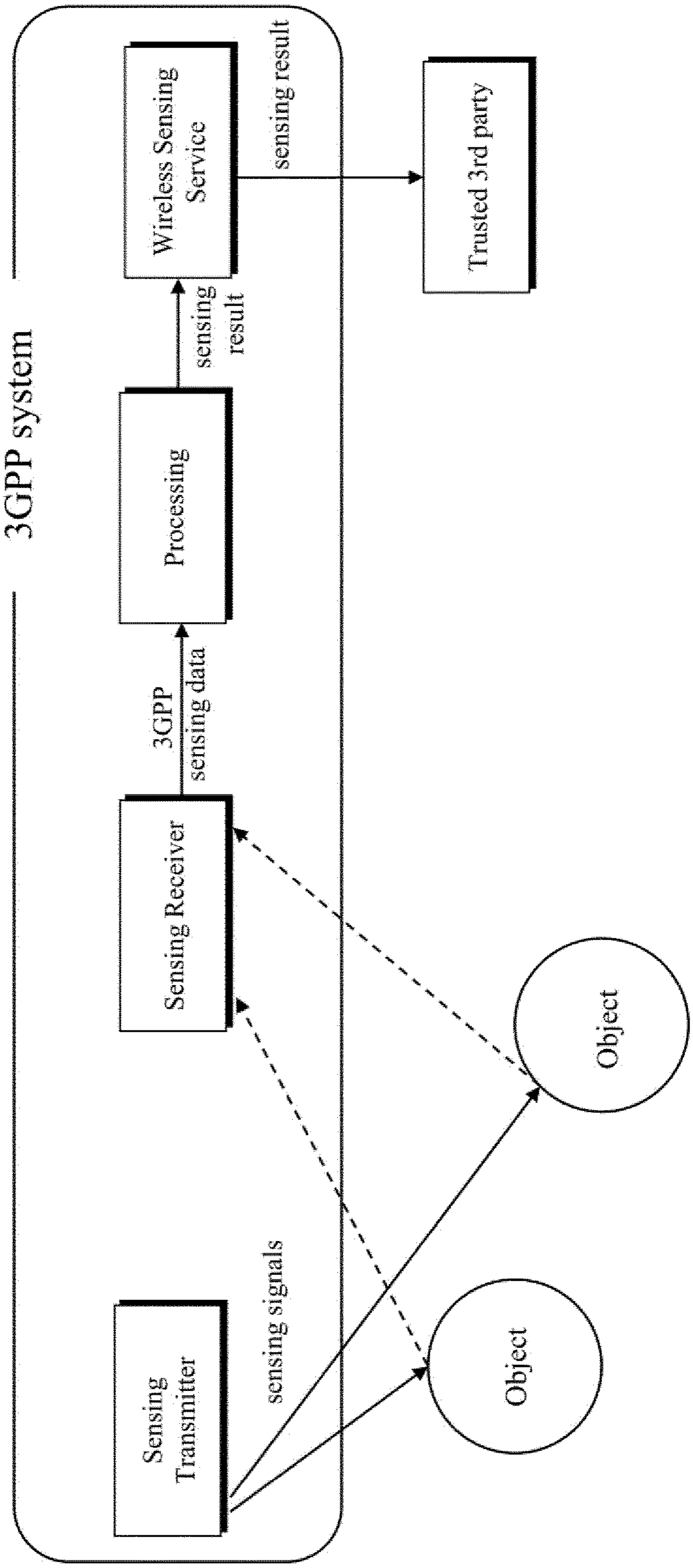
3GPP system
Wireless Sensing Service
sensing result
Trusted 3rd party
sensing result
Processing
3GPP sensing data
Sensing Receiver
Sensing Transmitter
sensing signals
Object
Object

**FIG. 15**

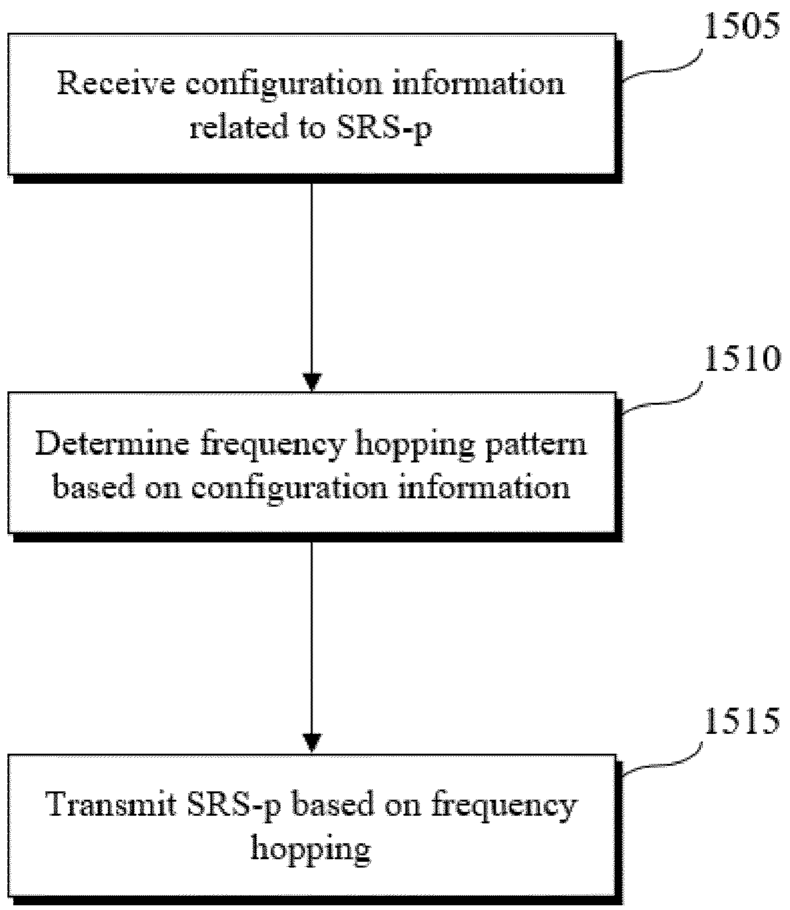
1505
Receive configuration information related to SRS-p
1510
Determine frequency hopping pattern based on configuration information
1515
Transmit SRS-p based on frequency hopping

# FIG. 16

| $C_{SRS}$ | $B_{SRS}$ | $B_{hop}$ |
|---|---|---|
| 0 | 112 | 56 |
| 1 | 120 | 60 |
| 2 | 128 | 64 |
| 3 | 136 | 68 |
| 4 | 144 | 72 |
| 5 | 152 | 76 |
| 6 | 160 | 80 |
| 7 | 168 | 56 |
| 8 | 168 | 84 |
| 9 | 176 | 88 |
| 10 | 184 | 92 |
| 11 | 192 | 64 |
| 12 | 192 | 96 |
| 13 | 200 | 100 |
| 14 | 216 | 108 |
| 15 | 224 | 56 |
| 16 | 240 | 60 |
| 17 | 240 | 80 |
| 18 | 256 | 64 |
| 19 | 264 | 88 |

FIG. 17

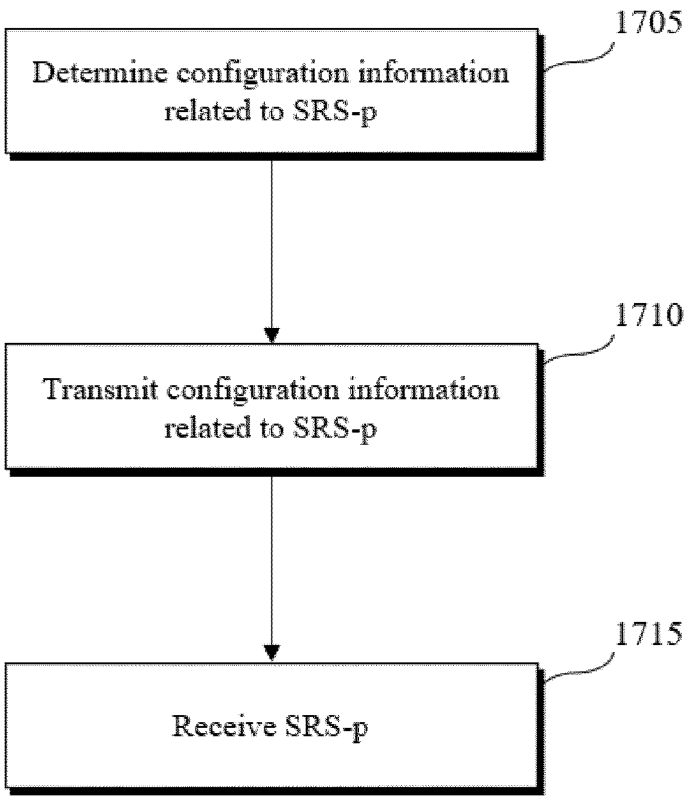
1705
Determine configuration information related to SRS-p
1710
Transmit configuration information related to SRS-p
1715
Receive SRS-p

FIG. 18

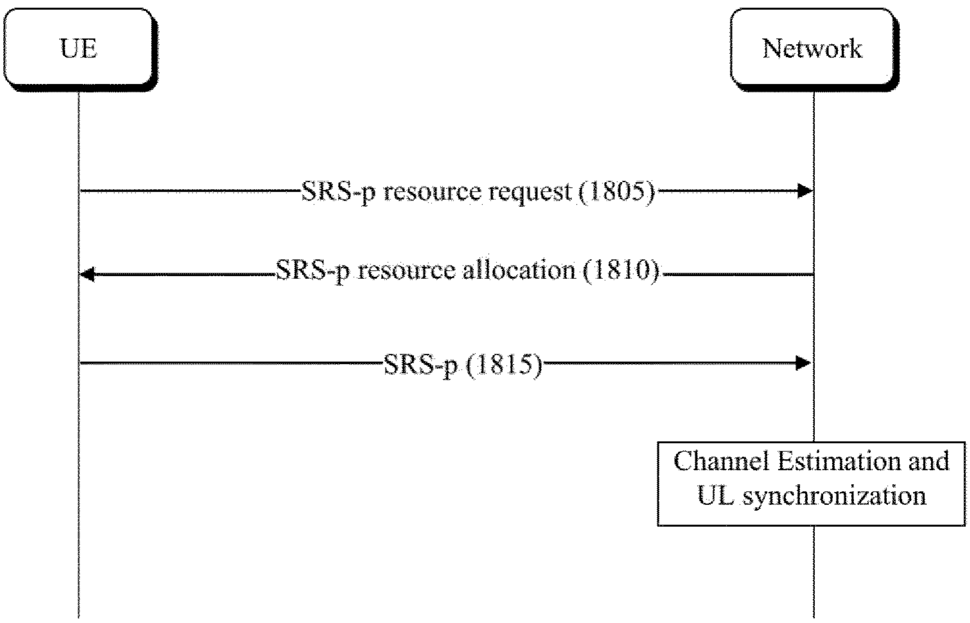
UE
Network
SRS-p resource request (1805)
SRS-p resource allocation (1810)
SRS-p (1815)
Channel Estimation and UL synchronization

FIG. 19

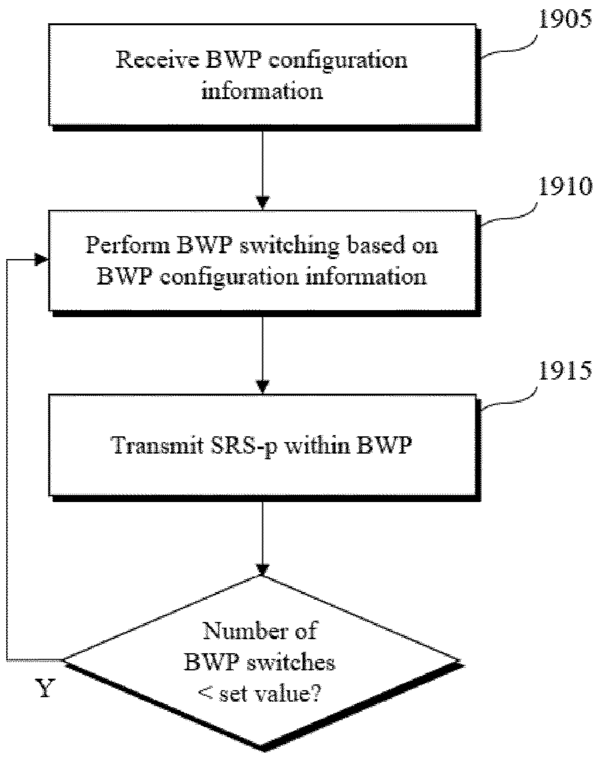
1905
Receive BWP configuration information
1910
Perform BWP switching based on BWP configuration information
1915
Transmit SRS-p within BWP
Number of BWP switches < set value?
Y

FIG. 20

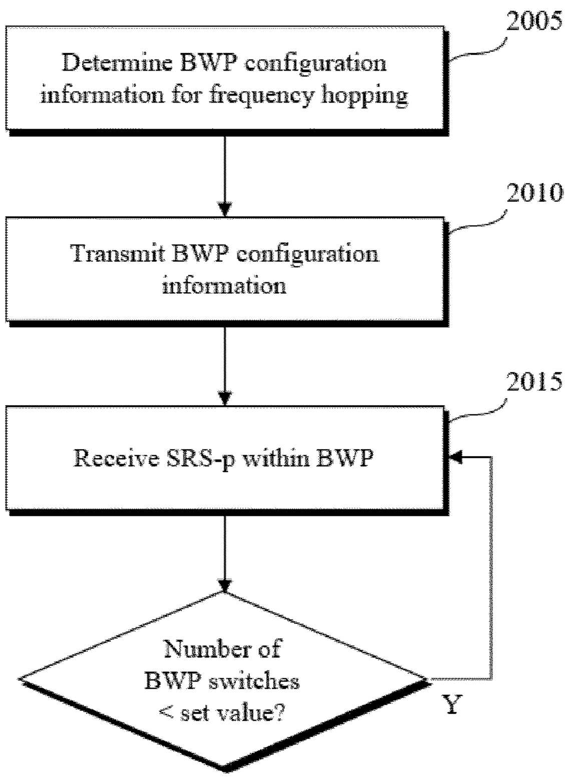
2005
Determine BWP configuration information for frequency hopping
2010
Transmit BWP configuration information
2015
Receive SRS-p within BWP
Number of BWP switches < set value?
Y

**FIG. 21**

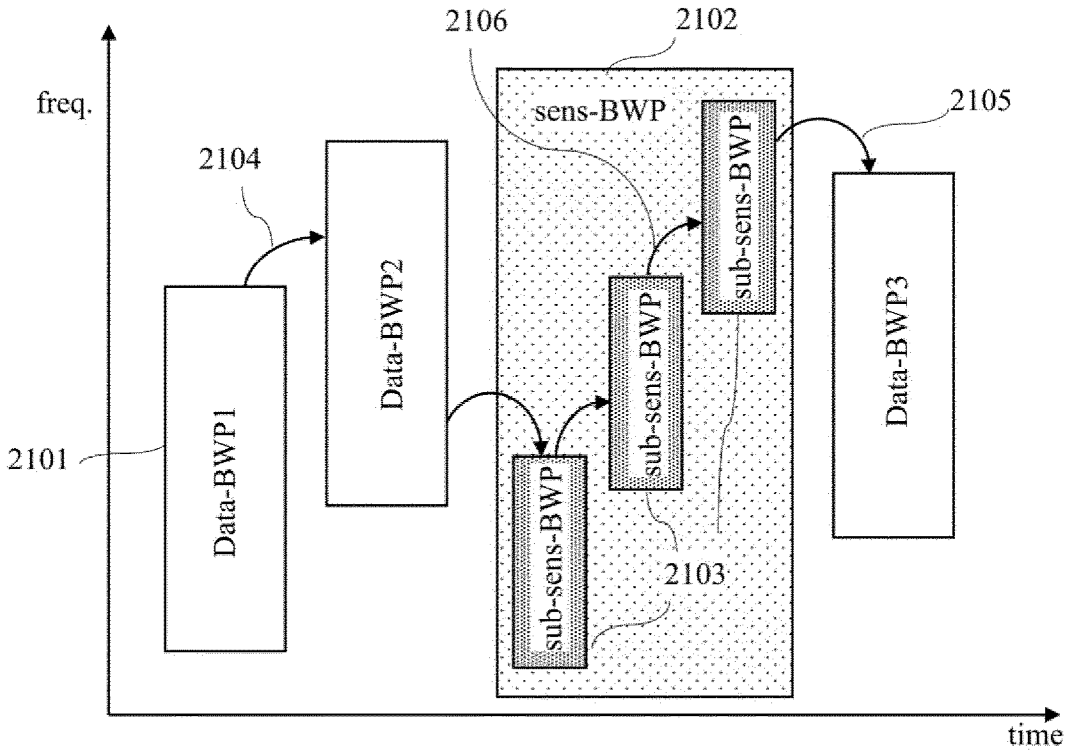
freq.
2104
2106
2102
sens-BWP
2105
2101
Data-BWP1
Data-BWP2
sub-sens-BWP
sub-sens-BWP
sub-sens-BWP
Data-BWP3
2103
time

**FIG. 22**

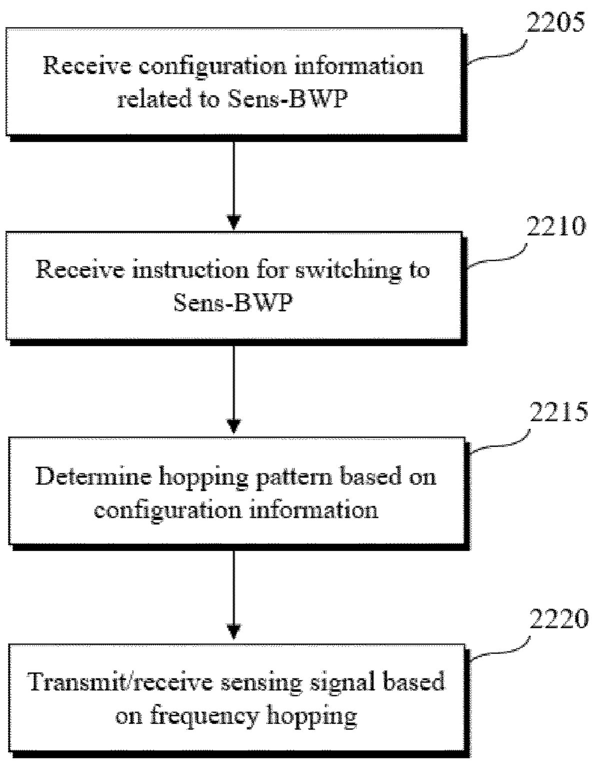
Receive configuration information related to Sens-BWP
2205
Receive instruction for switching to Sens-BWP
2210
Determine hopping pattern based on configuration information
2215
Transmit/receive sensing signal based on frequency hopping
2220

# FIG. 23

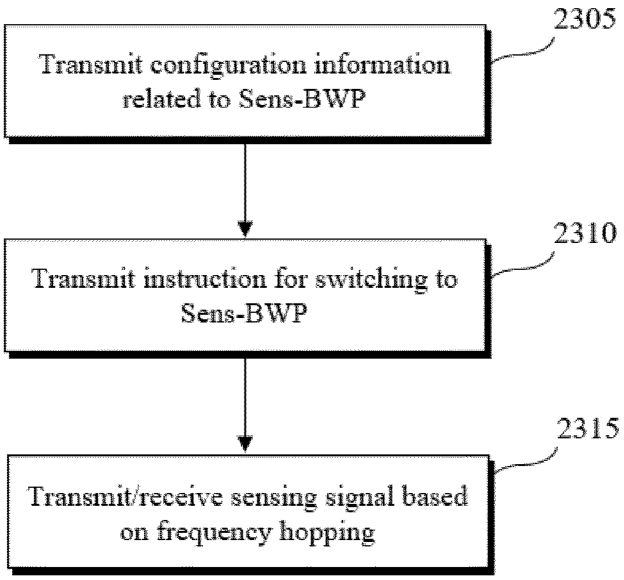
2305
Transmit configuration information related to Sens-BWP
2310
Transmit instruction for switching to Sens-BWP
2315
Transmit/receive sensing signal based on frequency hopping

# FIG. 24

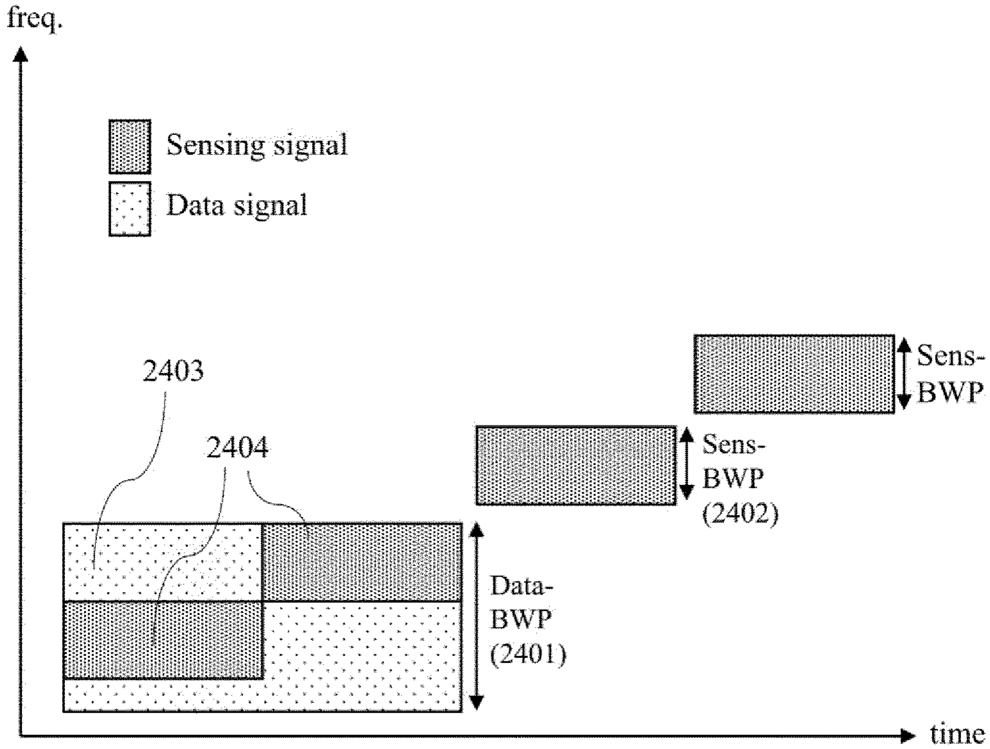
freq.
Sensing signal
Data signal
2403
2404
Sens-BWP
Sens-BWP (2402)
Data-BWP (2401)
time

# FIG. 25

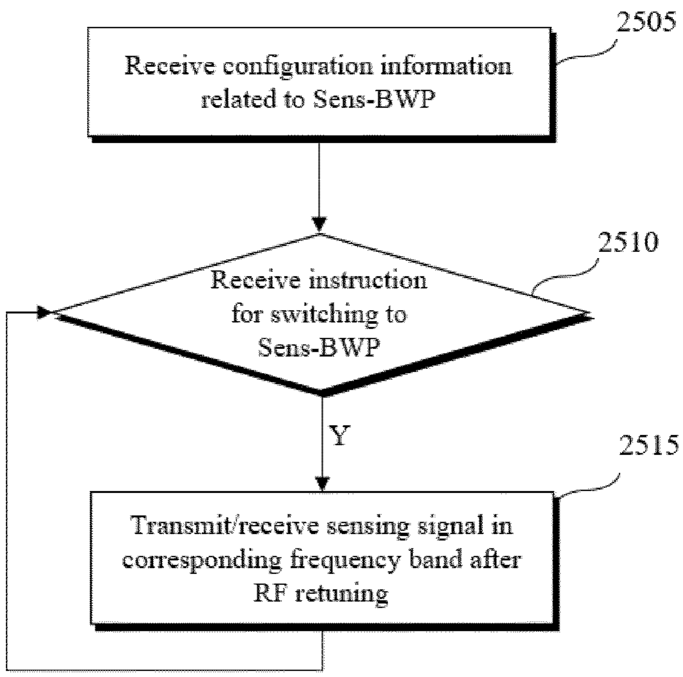
2505
Receive configuration information related to Sens-BWP
2510
Receive instruction for switching to Sens-BWP
Y
2515
Transmit/receive sensing signal in corresponding frequency band after RF retuning

# FIG. 26

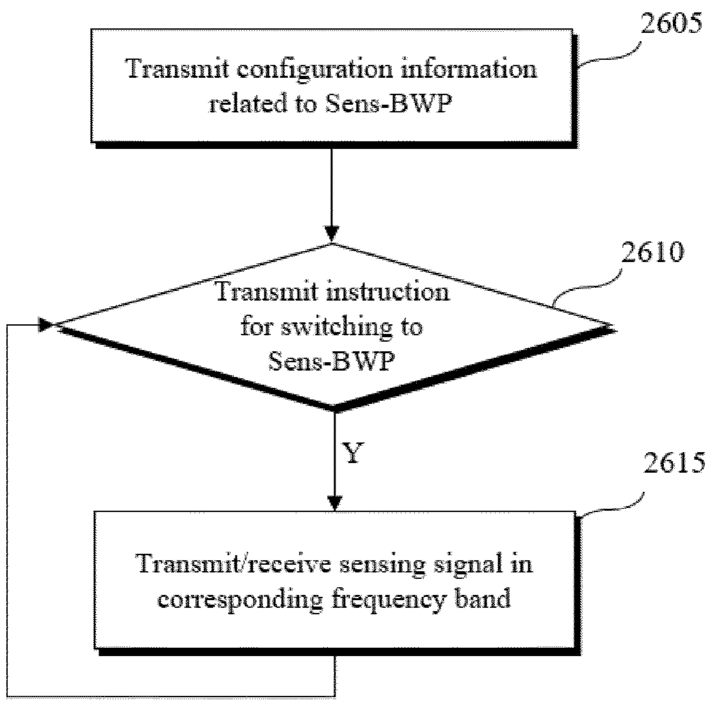
2605
Transmit configuration information related to Sens-BWP
2610
Transmit instruction for switching to Sens-BWP
Y
2615
Transmit/receive sensing signal in corresponding frequency band

FIG. 27

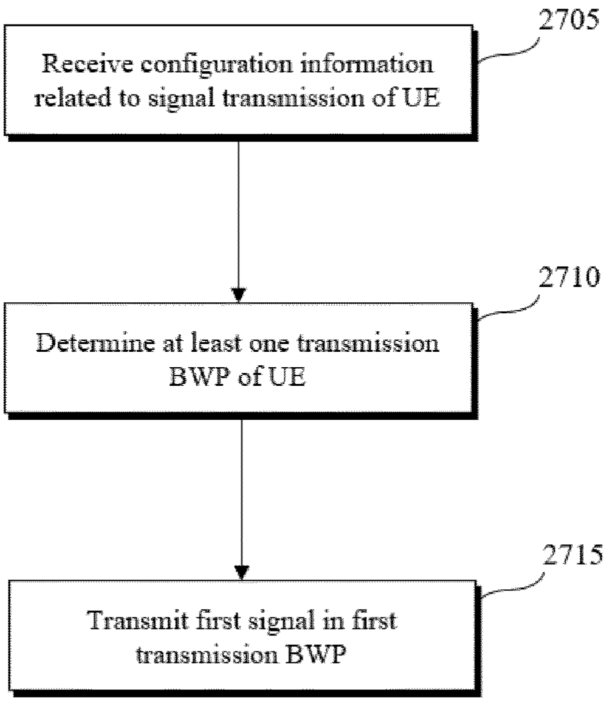
2705
Receive configuration information related to signal transmission of UE
2710
Determine at least one transmission BWP of UE
2715
Transmit first signal in first transmission BWP

FIG. 28

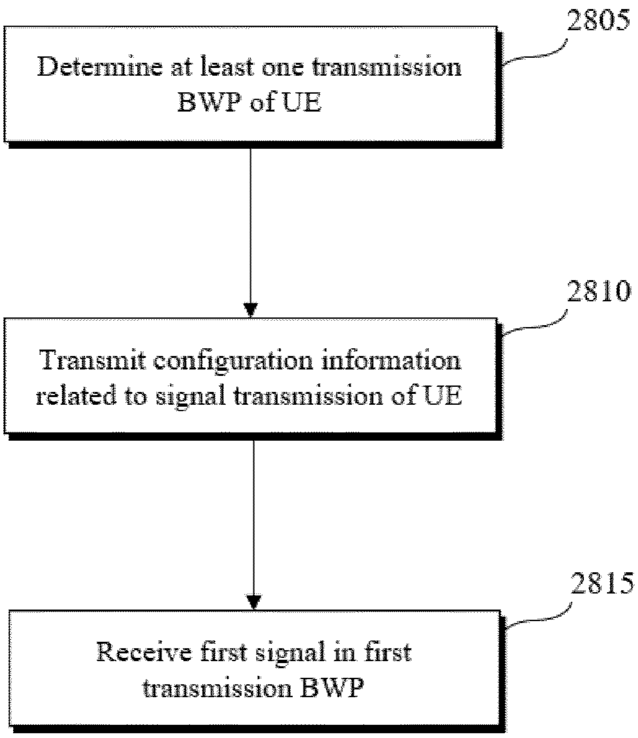
2805
Determine at least one transmission BWP of UE
2810
Transmit configuration information related to signal transmission of UE
2815
Receive first signal in first transmission BWP

# FIG. 29

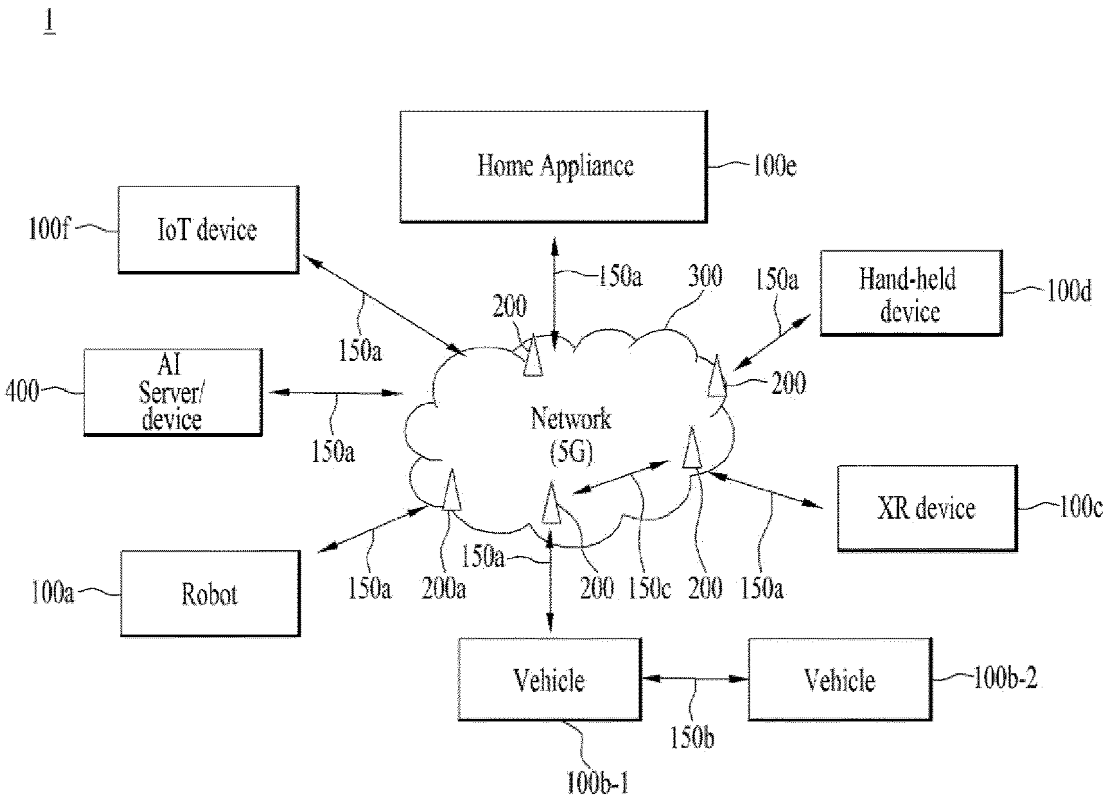
1
Home Appliance
100e
IoT device
100f
150a
300
150a
Hand-held device
100d
200
AI Server/ device
400
150a
200
Network (5G)
150a
XR device
100c
Robot
100a
150a
200a
150a
200
150c
200
150a
Vehicle
Vehicle
100b-2
150b
100b-1

# FIG. 30

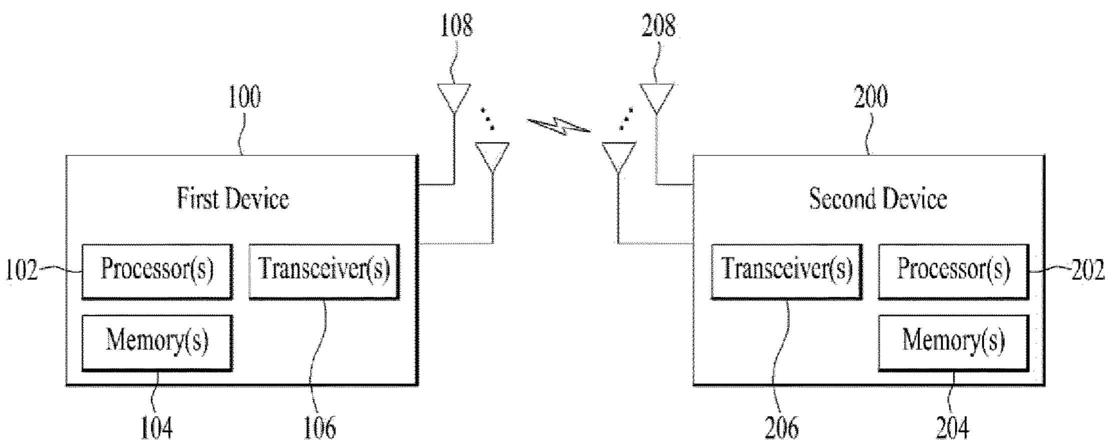
108
208
100
200
First Device
Second Device
102
Processor(s)
Transceiver(s)
Transceiver(s)
Processor(s)
202
Memory(s)
Memory(s)
104
106
206
204

# FIG. 31

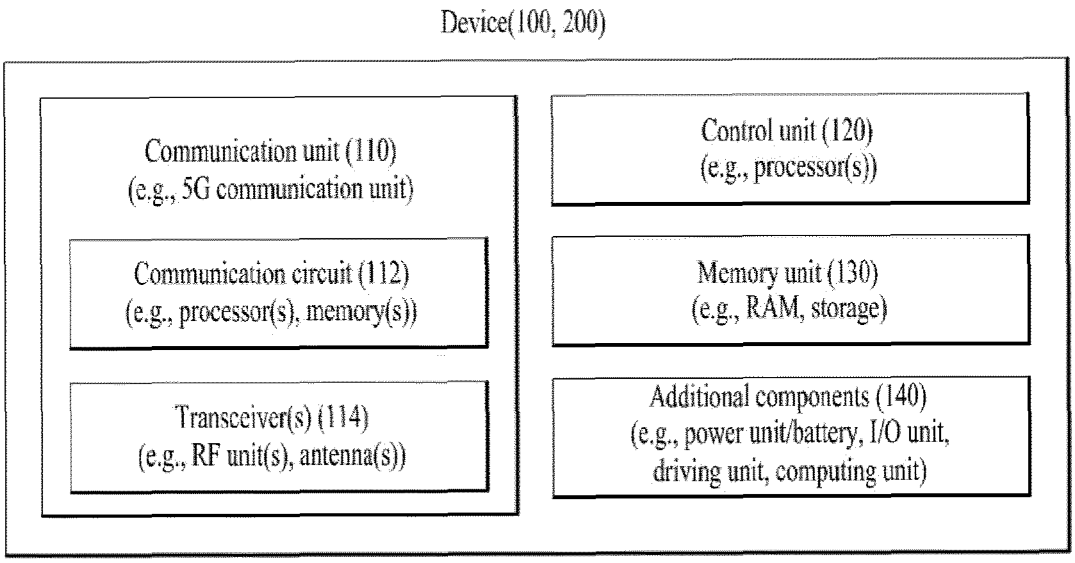
Device(100, 200)
Communication unit (110)
(e.g., 5G communication unit)
Communication circuit (112)
(e.g., processor(s), memory(s))
Transceiver(s) (114)
(e.g., RF unit(s), antenna(s))
Control unit (120)
(e.g., processor(s))
Memory unit (130)
(e.g., RAM, storage)
Additional components (140)
(e.g., power unit/battery, I/O unit,
driving unit, computing unit)

# FIG. 32

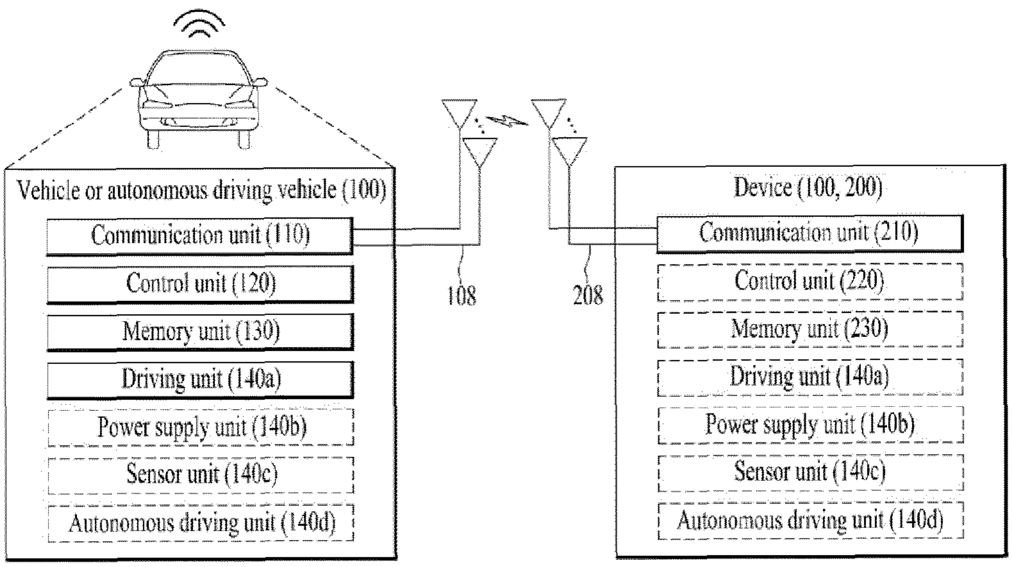
Vehicle or autonomous driving vehicle (100)
Communication unit (110)
Control unit (120)
Memory unit (130)
Driving unit (140a)
Power supply unit (140b)
Sensor unit (140c)
Autonomous driving unit (140d)
108
208
Device (100, 200)
Communication unit (210)
Control unit (220)
Memory unit (230)
Driving unit (140a)
Power supply unit (140b)
Sensor unit (140c)
Autonomous driving unit (140d)

**INTERNATIONAL SEARCH REPORT**

International application No.
**PCT/KR2024/095309**

**A. CLASSIFICATION OF SUBJECT MATTER**

**H04L 5/00**(2006.01)i; **H04W 72/0457**(2023.01)i; **H04W 64/00**(2009.01)i

According to International Patent Classification (IPC) or to both national classification and IPC

**B. FIELDS SEARCHED**

Minimum documentation searched (classification system followed by classification symbols)

H04L 5/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 상위 계층 시그널링(higher layer signaling), BWP, 주파수 호핑(frequency hopping), SRS, 센싱(sensing), ISAC

**C. DOCUMENTS CONSIDERED TO BE RELEVANT**

| Category* | Citation of document, with indication, where appropriate, of the relevant passages | Relevant to claim No. |
|---|---|---|
| Y | MODERATOR (ERICSSON). Feature Lead Summary #3 for Positioning for RedCap UEs. R1-2210476, 3GPP TSG RAN WG1 #110bis-e. 20 October 2022.<br>See pages 1, 17, 35-39 and 51. | 1-15 |
| Y | VIVO. Initial Study on Integrated Sensing and Communication for NR. RP-223115, 3GPP TSG RAN Meeting #98-e. 05 December 2022.<br>See pages 8-9. | 1-15 |
| Y | MODERATOR (ZTE). FL summary #1 on SRS enhancements. R1-2108217, 3GPP TSG RAN WG1 #106-e. 20 August 2021.<br>See page 55. | 2 |
| A | QUALCOMM INCORPORATED. Discussion on SRS enhancement. R1-2110170, 3GPP TSG-RAN WG1 Meeting #106bis-e. 02 October 2021.<br>See pages 10-14. | 1-15 |
| A | INTERDIGITAL, INC. NR-U Wideband operation. R1-1904857, 3GPP TSG RAN WG1 #96bis. Xi'an, China. 30 March 2019.<br>See pages 1-4. | 1-15 |

☐ Further documents are listed in the continuation of Box C. ☐ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **29 May 2024** | **29 May 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)